# FASCICULE DE BREVET EUROPEEN

(11) **EP 4 565 411 B1**
(45) Date de publication et mention de la délivrance du brevet: **18.03.2026**
(21) Numéro de dépôt: 23751003.7
(22) Date de dépôt: 01.08.2023
(51) Int. Cl.: B29C 70/38, B29B 11/16

(54) **GEOMETRIE D'UNE SURFACE DE DRAPAGE**
GEOMETRIE EINER AUFLAGEOBERFLÄCHE
GEOMETRY OF A LAY-UP SURFACE

(30) Priorité: 01.08.2022 BE 202205607
(43) Date de publication de la demande: 11.06.2025
(73) Titulaire: Safran Aero Boosters, 4041 Herstal (BE)
(72) Inventeur: WLASOW WLASOWSKI, Michel, 4041 HERSTAL (BE); GALLET, Julien, Philippe, 4041 HERSTAL (BE)
(74) Mandataire: Cabinet Beau de Loménie
(86) Numéro de dépôt international: PCT/EP2023/071227
(87) Numéro de publication internationale: WO 2024/028290

(56) Documents cités:
- WO-A1-2012/046020
- GB-A- 2 486 230

## Description

### Domaine Technique

La présente invention se rapporte à la fabrication de pièces en matériau composite par drapage sur une surface. En particulier, mais non exclusivement, l'invention se rapporte à la fabrication de carters de moteurs aéronautiques.

### Technique antérieure

L'utilisation de matériaux composites pour la fabrication de pièces aéronautiques, par exemple pour les carters de moteurs aéronautiques, permet d'obtenir des pièces résistantes et présentant des performances mécaniques équivalentes voire supérieures à celles réalisées en métal, tout en ayant une masse bien inférieure.

Il est connu de réaliser des pièces en matériau composite par drapage sur une surface de structures fibreuses pré-imprégnées. Pour des raisons de coûts de production et de répétabilité, le drapage peut être réalisé automatiquement, selon la technique de placement automatique de fibres (« AFP » en anglais, pour « automated fiber placement »). Un exemple de procédé de fabrication d'une pièce en matériau composite utilisant la méthode « AFP » est par exemple décrit dans le document FR3062336B1.

Toutefois, lorsque que l'on souhaite réaliser des pièces comprenant un corps de révolution partielle à l'extrémité ou aux extrémités duquel s'étendent des brides, avec un angle restreint entre le corps et au moins une bride, en particulier un angle aigu de 90° ou moins, la tête ou le rouleau de dépose des structures fibreuses ne permet pas d'accéder au fond dudit angle.

Ainsi, pour réaliser des pièces présentant de tels angles, on réalise le drapage avec des angles de plus grande amplitude pour permettre le passage de la tête ou du rouleau de dépose, puis on déforme la structure réalisée par drapage pour obtenir les angles souhaités. De telles solutions sont par exemple décrites dans les documents WO 2018/007756 et WO2012/046020.

Dans le document WO 2018/007756, afin de réaliser une pièce finale comprenant une bride et un corps en forme de demi-coquille présentant un rayon final donné, on commence par draper une préforme intermédiaire en forme de demi-coquille présentant un rayon plus faible que le rayon final à obtenir, et par conséquent un angle plus important entre le corps et la bride, ce qui permet de réaliser le drapage dudit angle. Lorsque le drapage est terminé, on déforme la préforme intermédiaire ainsi obtenue au rayon final souhaité, déformant ainsi la bride de sorte à obtenir l'angle souhaité entre la bride et le corps.

Dans le document WO2012/046020, on réalise une pièce comprenant un corps cylindrique et une bride circulaire s'étendant perpendiculairement au corps cylindrique selon le préambule de la revendication 1.

Le drapage est réalisé en drapant la portion destinée à former la bride dans le prolongement du drapage de la portion destinée à former le corps cylindrique. Puis, on procède à la déformation de la portion destinée à former la bride pour la placer perpendiculairement à l'axe de révolution du corps. La portion destinée à former la bride lors du drapage présente des ondulations circonférentielles de plus grande amplitude à mesure que l'on se rapproche de l'extrémité libre de ladite portion, de sorte à obtenir une bride lisse après déformation.

Cependant, dans les solutions décrites, la déformation mécanique de la structure drapée entraîne des déformations des structures fibreuses drapées et des contraintes importantes dans les fibres, en particulier à proximité du sommet de l'angle. Ces déformations sont d'autant plus accentuées quand un congé est présent entre la bride et le corps, ou lorsque l'angle entre la bride et le corps est inférieur à 90°.

### Exposé de l'invention

La présente invention a pour but de remédier aux inconvénients précités. A cet effet, la présente invention propose un procédé de détermination d'une géométrie d'un moule de drapage pour la réalisation d'une ébauche d'une pièce en matériau composite, ladite pièce comprenant un corps de révolution partielle d'axe dirigé selon une direction axiale et présentant un ou plusieurs rayons de référence donnés le long de ladite direction axiale, ledit corps s'étendant partiellement autour de la direction axiale selon une direction circonférentielle, et ladite pièce comprenant au moins une bride s'étendant depuis une extrémité du corps selon une direction d'extension, le procédé comprenant :
- la détermination d'une première surface de révolution d'axe dirigé suivant la direction axiale, ladite première surface s'étendant autour de la direction axiale suivant la direction circonférentielle,
- la détermination d'une deuxième surface située dans le prolongement de la première surface selon une direction de prolongement, l'angle formé entre la direction axiale et la direction de prolongement étant supérieur à l'angle formé entre la direction axiale et la direction d'extension, la deuxième surface présentant des courbes d'ondulations suivant la direction circonférentielle se suivant successivement suivant la direction de prolongement, chaque courbe d'ondulations circonférentielles correspondant à un arc de cercle appartenant à la bride à réaliser, la longueur curviligne de ladite courbe d'ondulations correspondant à la longueur dudit arc de cercle,

le procédé étant caractérisé en ce que le ou les rayons présentés par la première surface de révolution le long de la direction axiale sont inférieurs à le ou les rayons de référence pour une même position le long de la direction axiale, ladite première surface correspondant à une courbure suivant la direction circonférentielle d'une surface ayant la forme du corps à réaliser,
et en ce que la deuxième surface présente des courbures de correction dans la direction de prolongement, de sorte que tous les points de chaque courbe d'ondulations circonférentielles sont à une même distance curviligne de la jonction entre la première surface et la deuxième surface, ladite distance curviligne appartenant à la deuxième surface et ayant une valeur correspondant à la distance curviligne entre l'arc de cercle appartenant à la bride à réaliser correspondant à ladite courbe d'ondulations circonférentielles, et la jonction entre la bride et le corps à réaliser.

La première surface est destinée à être la surface de drapage sur laquelle l'ébauche du corps de la pièce à réaliser sera drapée. La deuxième surface est destinée à être la surface de drapage sur laquelle l'ébauche de la bride de la pièce à réaliser sera drapée.

L'angle formé entre la direction axiale et une autre direction doit se comprendre comme l'angle dirigé du corps, ou de la surface correspondant au corps, vers la bride, ou la surface correspondant à la bride, ledit angle étant mesuré depuis la partie de la direction axiale située du côté du corps ou de la surface correspondant au corps vers la partie de ladite autre direction la plus proche.

La distance ou longueur curviligne entre un point d'une courbe d'ondulations circonférentielles et la jonction entre la première surface et la deuxième surface est définie comme la plus petite distance curviligne appartenant à la deuxième surface et permettant de joindre ledit point de la courbe d'ondulations circonférentielles à ladite jonction.

La distance ou longueur curviligne entre un arc de cercle et la jonction entre la bride et le corps est définie comme la plus petite distance curviligne appartenant à la bride et permettant de joindre un point de l'arc de cercle à ladite jonction.

Ainsi, en réalisant des courbures de correction dans la direction de prolongement, on limite les contraintes dans les fibres suite à la mise en forme de l'ébauche drapée pour obtenir la préforme de la pièce. En effet, les ondulations circonférentielles génèrent des manques de longueur dans la direction d'extension, que l'on rectifie à l'aide des courbures de correction. En outre, la détermination de différentes longueurs curvilignes entre les arcs de cercle appartenant à la bride et la jonction entre la bride et le corps permet de prendre en compte le rayon d'un éventuel congé entre ladite bride et ledit corps dès la conception du moule. Ainsi, lors de la mise en forme de l'ébauche drapée pour obtenir la préforme de la pièce, on limite les tensions dans les fibres à l'endroit dudit congé.

Par ailleurs, en réalisant une première surface de drapage pour l'ébauche de corps présentant un rayon plus petit que le rayon du corps à fabriquer, on augmente encore l'angle entre la première surface et la deuxième surface destinée à l'ébauche de bride, ce qui facilite encore le passage de la tête de drapage et l'application des structures fibreuses à la jonction entre la première surface et la deuxième surface.

Selon une caractéristique particulière de l'invention, les points d'inflexion de chaque courbe d'ondulations circonférentielles sont compris dans un même cercle.

Selon une autre caractéristique particulière de l'invention, les minimums de chaque courbe d'ondulations circonférentielles sont compris dans un même cercle dont le rayon est supérieur ou égal au rayon de l'arc de cercle réalisant la jonction entre la première surface et la deuxième surface.

Selon une autre caractéristique particulière de l'invention, les minimums de chaque courbe d'ondulations circonférentielles sont compris dans un même cercle dont le rayon est identique à l'arc de cercle réalisant la jonction entre la première surface et la deuxième surface.

Ainsi, on s'assure d'obtenir le moins de contraintes possibles dans les fibres lors de la déformation de l'ébauche fibreuse.

Selon une autre caractéristique particulière de l'invention, les courbures de correction situées sur les maximums des ondulations circonférentielles présentent des rayons de courbure plus importants que les courbures de correction situées sur les points d'inflexion des ondulations circonférentielles.

En effet, les ondulations circonférentielles déforment la deuxième surface et peuvent donc engendrer des manques de matière sur les maximums des ondulations circonférentielles. Ainsi, en recourant à des courbures de correction plus courbées sur les maximums des ondulations circonférentielles, on peut apporter plus de matière à ces endroits.

Selon une autre caractéristique particulière de l'invention, l'angle entre la direction axiale et la direction d'extension est inférieur ou égal à 120° et l'angle entre la direction axiale et la direction de prolongement est supérieur à 120°.

Selon une autre caractéristique particulière de l'invention, la bride à réaliser comprend un congé à sa jonction avec le corps à réaliser.

L'invention concerne en outre un procédé de fabrication d'une pièce en matériau composite comprenant un corps de révolution partielle d'axe dirigé selon une direction axiale présentant un ou plusieurs rayons de référence donnés le long de la direction axiale, ledit corps s'étendant partiellement autour de la direction axiale selon une direction circonférentielle, et au moins une bride s'étendant depuis une extrémité du corps selon une direction d'extension, le procédé comprenant :
- la formation d'une ébauche fibreuse de la pièce à obtenir par dépôt d'une pluralité de plis fibreux par placement automatique de fibres sur un moule de drapage comprenant une première surface de drapage et une deuxième surface de drapage située dans le prolongement de la première surface de drapage, la première surface de drapage et la deuxième surface de drapage correspondant respectivement à au moins la première surface et la deuxième surface déterminées suivant le procédé de détermination d'une géométrie d'un moule de drapage selon l'invention, la portion de l'ébauche réalisée sur la première surface de drapage correspondant à une ébauche du corps et la portion de l'ébauche réalisée sur la deuxième surface de drapage correspondant à une ébauche de la bride,
- la mise en forme de l'ébauche fibreuse de sorte à obtenir une préforme fibreuse, ladite mise en forme comprenant le déploiement de l'ébauche de corps suivant la direction circonférentielle de sorte à obtenir une préforme de corps présentant le rayon de référence le long de la direction axiale et ayant la forme du corps à réaliser, et la mise en forme de l'ébauche de bride de sorte à obtenir une préforme de bride s'étendant depuis l'extrémité de la préforme de corps suivant la direction d'extension et ayant la forme de la bride à réaliser, puis
- la densification de la préforme fibreuse par une matrice de sorte à obtenir la pièce en matériau composite.

Ainsi, l'ébauche de bride présente des ondulations correspondant aux courbes d'ondulations circonférentielles et aux courbures de correction de la deuxième surface de drapage.

Selon une caractéristique particulière de l'invention, le déploiement de l'ébauche de corps et la mise en forme de l'ébauche de bride sont réalisés simultanément.

Ainsi, la mise en forme de l'ébauche fibreuse pour obtenir la préforme fibreuse à densifier est réalisée en une seule étape, les ondulations présentes sur l'ébauche de bride étant lissées intégralement lors de cette unique étape. Ce mode de réalisation est donc simplifié et plus rapide. On évite par conséquent une étape intermédiaire de mise en forme.

Selon une autre caractéristique particulière de l'invention, on réalise d'abord une mise en forme intermédiaire de l'ébauche de bride de sorte à obtenir une préforme intermédiaire de bride s'étendant depuis l'extrémité de l'ébauche de corps suivant une direction de prolongement intermédiaire, l'angle entre la direction de prolongement intermédiaire et la direction axiale étant inférieur à l'angle entre la direction de prolongement et la direction axiale mais supérieur à l'angle entre la direction d'extension et la direction axiale, puis on réalise le déploiement de l'ébauche de corps de sorte à obtenir la préforme de corps et de sorte à réaliser la mise en forme de la préforme intermédiaire de bride afin d'obtenir la préforme de bride s'étendant depuis l'extrémité de la préforme de corps suivant la direction d'extension et ayant la forme de la bride à réaliser.

Dans ce mode de réalisation, l'étape de mise en forme intermédiaire de l'ébauche de bride, qui permet de rabattre partiellement l'ébauche de bride en lissant les ondulations, et l'étape de déploiement de l'ébauche de corps, qui permet la mise en forme complète de l'ébauche de bride, sont réalisées séparément. Dans ce mode de réalisation, la préforme intermédiaire de bride ne comprend plus d'ondulations. On obtient ainsi une meilleure maîtrise de chacune de ces opérations. En outre, en réalisant ces deux étapes séparément, il est par exemple possible de procéder à un compactage après la mise en forme intermédiaire de l'ébauche de bride et avant le déploiement de l'ébauche de corps.

L'invention concerne en outre un procédé de fabrication d'une pièce en matériau composite comprenant un corps de révolution complète d'axe dirigé selon une direction axiale présentant un ou plusieurs rayons de référence donnés, ledit corps s'étendant partiellement autour de la direction axiale selon une direction circonférentielle, et au moins une bride s'étendant depuis une extrémité du corps selon une direction d'extension, le procédé comprenant :
- la réalisation de secteurs de pièce comprenant un secteur de corps de révolution partielle d'axe dirigé selon une direction axiale présentant le rayon de référence donné, ledit secteur de corps s'étendant partiellement autour de la direction axiale selon une direction circonférentielle, et au moins un secteur de bride s'étendant depuis une extrémité du secteur de corps selon une direction d'extension, la fabrication desdits secteurs de pièce étant réalisées selon le procédé de fabrication de l'invention décrit précédemment,
- l'assemblage des secteurs de pièce pour obtenir la pièce en matériau composite présentant une révolution complète.

Ainsi, la géométrie de moule de drapage de l'invention permet non seulement de réaliser des pièces présentant une révolution partielle, mais également des pièces de révolution complète par assemblage de plusieurs secteurs de pièce de révolution partielle.

### Brève description des dessins

[Fig. 1] La figure 1 est une vue en trois dimensions d'une pièce réalisable en utilisant un moule de drapage selon l'invention, comprenant un corps et au moins une bride.
[Fig. 2A] La figure 2A est une vue schématique en coupe de la pièce de la figure 1 au niveau d'un premier rayon de la pièce.
[Fig. 2B] La figure 2B est une vue schématique en coupe de la pièce de la figure 1 au niveau d'un deuxième rayon de la pièce.
[Fig. 2C] La figure 2C est une vue schématique en coupe de la pièce de la figure 1 au niveau d'un troisième rayon de la pièce.
[Fig. 3] La figure 3 est une vue schématique en trois dimensions de la première surface d'un moule selon l'invention.
[Fig. 4A] La figure 4A est une vue schématique en coupe de la première surface de la figure 3 au niveau d'un premier rayon de ladite première surface.
[Fig. 4B] La figure 4B est une vue schématique en coupe de la première surface de la figure 3 au niveau d'un deuxième rayon de ladite première surface.
[Fig. 4C] La figure 4C est une vue schématique en coupe de la première surface de la figure 3 au niveau d'un troisième rayon de ladite première surface.
[Fig. 5] La figure 5 est une vue schématique partielle en coupe de la pièce de la figure 1 pour la détermination des longueurs des arcs de cercle appartenant à la bride.
[Fig. 6] La figure 6 est une vue schématique partielle en coupe de la pièce de la figure 1 pour la détermination des longueurs de la bride.
[Fig. 7] La figure 7 est une vue en trois dimensions des première et deuxième surfaces obtenues selon l'invention permettant de réaliser un moule de drapage pour la pièce de la figure 1.
[Fig. 8] La figure 8 est une vue des surfaces illustrées sur la figure 7 illustrant des ondulations circonférentielles.
[Fig. 9] La figure 9 est une première vue partielle en trois dimensions des surfaces illustrées sur la figure 7 illustrant des courbures de correction.
[Fig. 10] La figure 10 est une deuxième vue partielle en trois dimensions des surfaces illustrées sur la figure 7 illustrant des courbures de correction.
[Fig. 11] La figure 11 est une illustration schématique d'un moule de drapage comprenant les surfaces illustrées sur les figures 7 à 10.
[Fig. 12] La figure 12 est une illustration schématique et partielle de la formation d'un ensemble drapé par placement automatique de fibres.
[Fig. 13] La figure 13 est une illustration schématique partielle d'une ébauche fibreuse obtenue par drapage sur le moule illustré sur la figure 11.
[Fig. 14] La figure 14 est une illustration schématique partielle d'une préforme fibreuse intermédiaire obtenue par déploiement de l'ébauche illustrée sur la figure 13.
[Fig. 15] La figure 15 est une illustration schématique partielle d'une préforme fibreuse obtenue par mise en forme de l'ébauche illustrée sur la figure 13 ou de la préforme intermédiaire illustré sur la figure 14.
[Fig. 16] La figure 16 est une illustration schématique d'une pièce de révolution complète obtenue par assemblage de deux pièces telles qu'illustrées sur la figure 1.

### Description des modes de réalisation

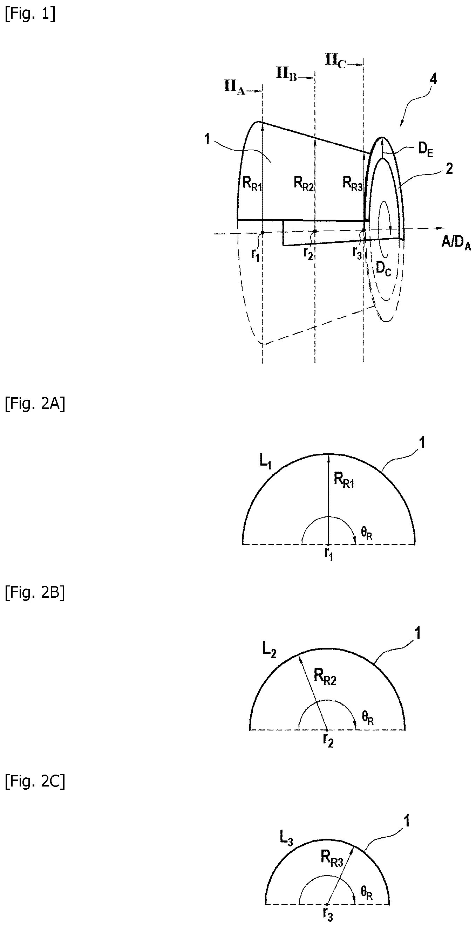

La figure 1 illustre une pièce 4 en matériau composite comprenant un corps 1 et au moins une bride 2. Le terme de « bride » peut désigner une collerette. La pièce 4 peut être un carter de moteur aéronautique comprenant deux brides.

Le corps 1 est un volume de révolution partielle dont l'axe de révolution A est dirigé selon une direction axiale D_{A}. Le corps 1 s'étend partiellement autour de son axe de révolution A selon une direction circonférentielle D_{C}. La direction circonférentielle D_{C} s'étend circulairement dans un plan perpendiculaire à la direction axiale D_{A}. Le corps 1 peut présenter une forme tronconique ou tubulaire, ou encore un profil quelconque axisymétrique.

Le corps 1 présente un ou plusieurs rayons de référence donnés le long de ladite direction axiale D_{A}. Dans chaque plan perpendiculaire à la direction axiale D_{A}, le rayon de référence R_{R1}, R_{R2}, R_{R3} est défini comme la distance entre la direction axiale D_{A} et l'arc de cercle formé par le corps 1, et correspond à une position r₁, r₂, r₃ de la direction axiale D_{A}, comme illustré sur les figures 1, 2A, 2B et 2C. En outre, chaque position r₁, r₂, r₃ est également associée à une longueur L₁, L₂, L₃ de l'arc de cercle formé par le corps 1 dans le plan perpendiculaire à la direction axiale D_{A} et passant par ladite position r₁, r₂, r₃.

Dans l'exemple illustré sur les figures 1, 2A, 2B et 2C, l'arc de cercle formé par le corps 1 de la pièce 4 dans chaque plan perpendiculaire à la direction axiale D_{A} est intercepté par un angle de référence θ_{R} de 180°. On ne sort bien entendu pas du cadre de l'invention si l'angle de référence θ_{R} interceptant l'arc de cercle formé par le corps 1 dans chaque plan perpendiculaire à la direction axiale D_{A} est inférieur à 180°, ou supérieur à 180° mais strictement inférieur à 360°.

La bride 2 est présente à une extrémité du corps 1, et s'étend depuis ladite extrémité du corps 1. La bride 2 présente une forme annulaire ou tronconique d'axe de révolution partielle A dirigé selon la direction axiale D_{A}. La bride 2 s'étend depuis le corps 1 selon une direction d'extension D_{E}.

Ainsi, toute la pièce 4 en matériau composite est un volume de révolution partielle d'axe A dirigé selon la direction axiale D_{A}. La direction d'extension D_{E} est définie pour chaque point de la jonction entre le corps 1 et la bride 2. Les directions d'extension D_{E} en deux points différents de ladite jonction peuvent être orientées différemment. Toutefois, les directions d'extensions D_{E} définies pour chaque point de la jonction entre le corps 1 et la bride 2 doivent être sécantes en un unique point appartenant à l'axe de révolution A de la pièce 4.

Dans l'exemple illustré sur la figure 1, la bride 2 forme un angle de 90° avec l'axe de révolution A du corps 1, ce qui correspond à une direction d'extension D_{E} perpendiculaire à la direction axiale D_{A}. En outre, la bride 2 forme un angle aigu inférieur 90° avec la surface du corps 1 depuis lequel elle s'étend, ce qui rend la pièce 4 particulièrement délicate à réaliser par la méthode du placement automatique de fibres selon les techniques de l'art antérieur. On ne sort bien entendu pas du cadre de l'invention si la bride forme un angle inférieur à 90° avec l'axe de révolution du corps, ce qui correspond à un angle inférieur à 90° entre la direction d'extension et la direction axiale. On ne sort pas non plus du cadre de l'invention si la bride forme un angle supérieur à 90° avec l'axe de révolution du corps, si cet angle est suffisamment faible pour entraîner des problématiques de collisions lors du drapage automatique dudit angle.

On souhaite réaliser la pièce 4 en matériau composite illustrée sur la figure 1 par drapage de structures fibreuses sur une surface, selon la méthode bien connue de placement automatique de fibres (« AFP » en anglais, pour « automated fiber placement »). Toutefois, l'angle réduit formé entre la bride 2 et le corps 1 de la pièce 4 ne permet pas de réaliser un drapage directement sur une surface ayant la forme de la pièce finale 4. En effet, cet angle ne permet pas le passage complet d'une tête ou d'un rouleau de dépose automatique, et entraîne ainsi une dépose peu satisfaisante des structures fibreuses au fond de l'angle.

L'invention propose par conséquent de concevoir une géométrie de drapage particulière présentant un angle important voire plat entre une première surface destinée à draper l'ébauche du corps 1 et une deuxième surface destinée à draper l'ébauche de la bride 2, afin de pouvoir procéder au drapage automatique des structures fibreuses.

Afin de permettre la mise en forme de l'ébauche fibreuse drapée au bon angle sans entraîner la création de tensions importantes dans les structures fibreuses drapées, et plus particulièrement à proximité du sommet de l'angle entre la bride 2 et le corps 1, il est nécessaire de concevoir une géométrie particulière pour le moule de drapage.

Dans un souci de simplification des figures et de la description, la première surface « géométrique » déterminée selon le procédé de détermination d'une géométrie de drapage de l'invention et la première surface « réelle » de drapage du moule sont identiques et confondues pour porter la même référence « 100 ». De même, la deuxième surface « géométrique » déterminée selon le procédé de détermination d'une géométrie de drapage de l'invention et la deuxième surface « réelle » de drapage du moule sont identiques et confondues pour porter la même référence « 200 ». Bien entendu, on ne sort pas du cadre de l'invention si les première et deuxièmes surfaces « réelles » de drapage ne correspondent qu'à une portion des première et deuxième surfaces « géométriques » déterminées.

Le moule comprend une première surface 100 de drapage, permettant de draper l'ébauche fibreuse du corps 1, et une deuxième surface 200 de drapage, permettant de draper l'ébauche fibreuse de la bride 2. La deuxième surface 200 du moule s'étend dans le prolongement de la première surface 100 du moule, selon une direction de prolongement D_{P}.

De préférence, en tout point de la jonction entre la première surface et la deuxième surface, la tangente de la première surface est confondue avec la tangente de la deuxième surface.

On ne sort bien entendu pas du cadre de l'invention si, en tout point de la jonction entre la première surface et la deuxième surface, la tangente de la première surface est légèrement inclinée par rapport à la tangente de la deuxième surface, pourvu que la jonction entre la première surface et la deuxième surface soit aisément accessible pour une tête ou un rouleau de dépose automatique de structures fibreuses. Ainsi, en tout point de la jonction entre la première surface et la deuxième surface, l'angle entre la tangente de la première surface et la tangente de la deuxième surface est typiquement supérieur ou égal à 120°, et de préférence égal à 180°.

La première surface 100 est une surface de révolution, partielle ou complète, dont l'axe de révolution est dirigé selon la direction axiale D_{A}. La longueur de la première surface 100 suivant la direction axiale D_{A} est au moins égale à la longueur du corps 1 à fabriquer suivant la direction axiale D_{A}.

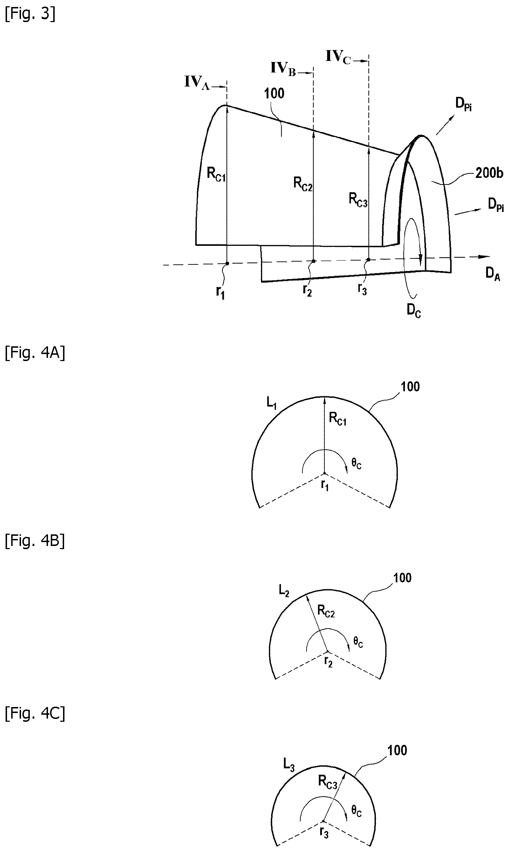

L'arc de cercle formé par la première surface 100 dans chaque plan perpendiculaire à la direction axiale D_{A} est intercepté par un angle de construction θ_{C} supérieur à l'angle de référence θ_{R}, comme illustré sur les figures 3, 4A, 4B et 4C. La première surface 100 présente donc une forme plus « fermée » que le corps 1 suivant la direction circonférentielle D_{C}. Dans le cas où la première surface 100 est une surface de révolution complète, et donc que l'arc de cercle formé par la première surface 100 du moule dans chaque plan perpendiculaire à la direction axiale D_{A} est un cercle complet, on considère que l'angle de construction θ_{C} est égal à 360°.

De préférence, le rapport de transformation, qui correspond au rapport entre l'angle de référence θ_{R} par l'angle de construction θ_{C}, est compris entre 0,6 et 0,8. A titre d'exemple, un corps 1 en forme de demi-coquille, c'est-à-dire présentant un angle de référence θ_{R} de 180° comme sur les figures 1 à 2C, et une première surface présentant une révolution complète, c'est-à-dire présentant un angle de construction θ_{C} de 360°, correspondront à un rapport de transformation de 0,5.

La première surface 100 présente un ou plusieurs rayons de construction le long de la direction axiale D_{A}, comme illustré sur les figures 3, 4A, 4B et 4C. Dans chaque plan perpendiculaire à la direction axiale D_{A}, le rayon de construction est défini comme la distance entre la direction axiale D_{A} et l'arc de cercle formé par la première surface 100. Pour chaque position r₁, r₂, r₃ de la direction axiale D_{A} correspondant à un rayon de référence R_{R1}, R_{R2}, R_{R3} du corps 1, on associe un rayon de construction R_{C1}, R_{C2}, R_{C3} de la première surface 100. On associe par conséquent chaque rayon de construction R_{C1}, R_{C2}, R_{C3} de la première surface 100 à un rayon de référence R_{R1}, R_{R2}, R_{R3}. Pour chaque position r₁, r₂, r₃ de la direction axiale D_{A}, le rayon de construction R_{C1}, R_{C2}, R_{C3} de la première surface 100 doit être inférieur au rayon de référence R_{R1}, R_{R2}, R_{R3} correspondant.

Pour chaque position r₁, r₂, r₃ de la direction axiale D_{A}, la longueur de l'arc de cercle formé par la première surface 100 est identique à la longueur L₁, L₂, L₃ de l'arc de cercle du corps 1 associé à ladite position r₁, r₂, r₃. Autrement dit, pour la détermination de la première surface 100 du moule, on conserve les distances curvilignes du corps 1 suivant la direction circonférentielle D_{C}. Ainsi, pour chaque position r₁, r₂, r₃ de la direction axiale D_{A}, le rapport du rayon de construction R_{C1}, R_{C2}, R_{C3} par le rayon de référence R_{R1}, R_{R2}, R_{R3} correspond au rapport de transformation décrit précédemment.

Ainsi, la première surface 100 correspond à une courbure selon la direction circonférentielle D_{C} de la surface du corps à fabriquer.

On peut générer un modèle géométrique ayant la forme de la pièce à fabriquer, une première portion du modèle géométrique ayant la forme du corps à fabriquer et une deuxième portion du modèle géométrique ayant la forme de la bride à fabriquer. Lorsque l'on applique la transformation décrite précédemment à la première portion du modèle géométrique de la pièce à fabriquer, qui correspond à une courbure selon la direction circonférentielle D_{C} de sorte à diminuer les rayons, on obtient la première surface 100. Une telle transformation de la première portion du modèle géométrique de la pièce à fabriquer va générer une inclinaison de la deuxième portion du modèle géométrique ayant la forme de la bride à fabriquer, qui ne s'étendra plus selon la direction d'extension D_{E} mais s'étendra selon une direction de prolongement intermédiaire D_{Pi}, de sorte à obtenir une deuxième surface géométrique intermédiaire 200b, comme illustré sur la figure 3.

L'angle formé entre la première surface 100 et la deuxième surface géométrique intermédiaire 200b est supérieur à l'angle formé entre la surface du corps et la surface de la bride à fabriquer. Pour rappel, l'angle formé entre la direction axiale et une autre direction doit se comprendre ici comme l'angle dirigé de la première surface 100 vers la deuxième surface géométrique intermédiaire 200b, ledit angle étant mesuré depuis la partie de la direction axiale située du côté de la première surface 100 vers la deuxième surface géométrique intermédiaire 200b.

La deuxième surface 200 du moule est conçue en plusieurs étapes. La deuxième surface 200 est de préférence déterminée à partir de la deuxième surface géométrique intermédiaire 200b. Toutefois, on ne sort pas du cadre de l'invention si la deuxième surface 200 est déterminée directement à partir du modèle géométrique de la bride à réaliser.

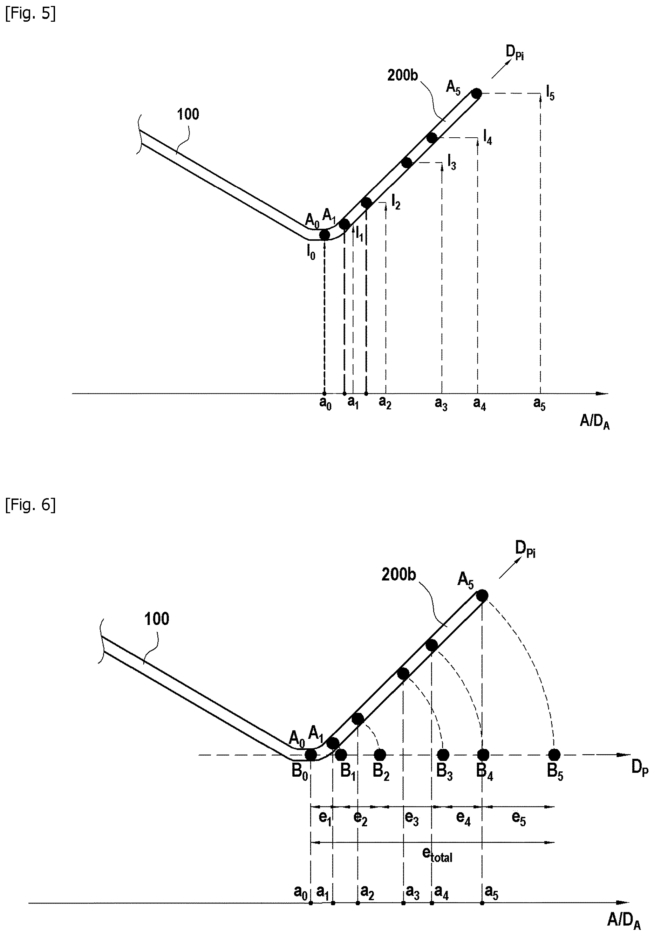

La première étape consiste à déterminer le périmètre d'un ou plusieurs arcs de cercle appartenant à la bride ou à la deuxième surface géométrique intermédiaire 200b selon la référence choisie, lesdits arcs de cercle ayant pour centre un point appartenant à l'axe de révolution, en fonction de leur distance par rapport à l'axe de révolution et de la position de leur centre sur l'axe de révolution. Dans l'exemple illustré sur les figures 5 et 6, lesdits arcs de cercle appartiennent à un plan perpendiculaire à la direction axiale.

Dans le cas où la deuxième surface 200 est déterminée directement à partir du modèle géométrique de la bride à réaliser, si un congé réalise la jonction entre la bride et le corps, ou dans le cas où la direction d'extension n'est pas perpendiculaire à la direction axiale, il est nécessaire de prendre en compte la position du centre des arcs de cercle appartenant à la bride sur l'axe de révolution. On considère que le congé qui réalise la jonction entre la bride et le corps fait partie de la bride.

Dans le cas où la deuxième surface 200 est déterminée à partir de la deuxième surface géométrique intermédiaire 200b, si un congé réalise la jonction entre la première surface 100 et la deuxième surface géométrique intermédiaire 200b, ou dans le cas où la une direction de prolongement intermédiaire D_{Pi} n'est pas perpendiculaire à la direction axiale, il est nécessaire de prendre en compte la position du centre des arcs de cercle appartenant à la surface géométrique intermédiaire 200b sur l'axe de révolution. On considère que le congé qui réalise la jonction entre la première surface 100 et la deuxième surface géométrique intermédiaire 200b fait partie de la deuxième surface géométrique intermédiaire 200b.

Dans notre exemple illustré sur les figures 5 et 6, il faut tenir compte du congé entre la première surface 100 et la deuxième surface géométrique intermédiaire 200b, car il y a un congé entre le corps 1 et la bride 2. Ainsi, il faut donc déterminer la longueur des arcs de cercle appartenant à la deuxième surface géométrique intermédiaire 200b et de arcs de cercle appartenant à la partie de la deuxième surface géométrique intermédiaire 200b s'étendant selon la direction de prolongement intermédiaire D_{Pi}.

Si la deuxième surface 200 était déterminée directement à partir du modèle géométrique de la bride à réaliser, on déterminerait la longueur des arcs de cercle appartenant au congé de la bride 2 et de arcs de cercle appartenant à la partie de la bride 2 s'étendant selon la direction d'extension D_{E}.

On peut choisir plusieurs points A₀, A₁, A₂, A₃, A₄, A₅ appartenant à la deuxième surface géométrique intermédiaire 200b ou à la bride 2 disposés à des distances différentes de l'axe de révolution A, comme illustré sur les figures 5 et 6. Les points choisis A₀, A₁, A₂, A₃, A₄, A₅ comprennent de préférence un point A₀ appartenant à la jonction entre la première surface 100 et la deuxième surface géométrique intermédiaire 200b, ou à la jonction entre le modèle du corps et le modèle de la bride 2 à réaliser selon le cas, et un point A₅ appartenant à l'extrémité de la deuxième surface géométrique intermédiaire 200b ou du modèle géométrique de la bride 2 selon le cas. Comme un congé est présent, il est nécessaire de discrétiser le congé. Ainsi, les points choisis A₀, A₁, A₂, A₃, A₄, A₅ comprennent de préférence un point A₁ appartenant au congé et un point A2 présent à l'extrémité du congé opposée à la jonction. On ne sort bien entendu pas du cadre de l'invention si plus ou moins de points sont choisis, ou si leur placement est différent.

Chacun des points A₀, A₁, A₂, A₃, A₄, A₅ est associé respectivement à une position a₀, a₁, a₂, a₃, a₄, a₅ sur l'axe de révolution A, comme illustré sur la figure 5. Chacun des points A₀, A₁, A₂, A₃, A₄, A₅ est également associé à un arc de cercle comprenant ledit point dont le centre appartient à l'axe de révolution A. Ainsi, chacun des points A₀, A₁, A₂, A₃, A₄, A₅ est respectivement associé à un arc de cercle dont le centre a pour position a₀, a₁, a₂, a₃, a₄, a₅. Chaque arc de cercle associé à un point A₀, A₁, A₂, A₃, A₄, A₅ présente respectivement une longueur I₀, I₁, I₂, I₃, I₄, I₅ selon la direction circonférentielle D_{C}.

La deuxième étape consiste à déterminer une ou plusieurs longueurs curvilignes depuis la jonction entre la première surface 100 et la deuxième surface géométrique intermédiaire 200b, ou depuis la jonction entre les modèles géométriques de la bride et du corps, selon le cas, jusqu'à un ou plusieurs des arcs de cercle appartenant à la deuxième surface géométrique intermédiaire 200b ou à la bride.

Dans le cas où la deuxième surface 200 est déterminée directement à partir du modèle géométrique de la bride à réaliser, si une arête nette réalise la jonction entre la bride et le corps, les longueurs curvilignes à déterminer entre la jonction et les arcs de cercle appartenant à la bride sont des longueurs rectilignes s'étendant selon la direction d'extension D_{E}. Ainsi, dans cette configuration, les longueurs depuis la jonction sont aisées à déterminer. Dans le cas où un congé réalise la jonction entre la bride et le corps, les longueurs curvilignes à déterminer entre la jonction et les arcs de cercle appartenant à la bride ne sont pas rectilignes.

Dans le cas où la deuxième surface 200 est déterminée à partir de la deuxième surface géométrique intermédiaire 200b, si une arête nette réalise la jonction entre la première surface 100 et la deuxième surface géométrique intermédiaire 200b, les longueurs curvilignes à déterminer entre la jonction et les arcs de cercle appartenant à la deuxième surface géométrique intermédiaire 200b sont des longueurs rectilignes s'étendant selon la direction de prolongement intermédiaire D_{Pi}. Ainsi, dans cette configuration, les longueurs depuis la jonction sont aisées à déterminer. Dans le cas où un congé réalise la jonction entre la première surface 100 et la deuxième surface géométrique intermédiaire 200b, les longueurs curvilignes à déterminer entre la jonction et les arcs de cercle appartenant à la deuxième surface géométrique intermédiaire 200b ne sont pas rectilignes.

Dans notre exemple illustré sur les figures 5 et 6, il faut tenir compte du congé entre la première surface 100 et la deuxième surface géométrique intermédiaire 200b, car il y a un congé entre le corps 1 et la bride 2. Ainsi, il faut donc déterminer les longueurs curvilignes entre la jonction et les arcs de cercle appartenant à la deuxième surface géométrique intermédiaire 200b ou au modèle géométrique de la bride 2 selon le cas.

On reprend les points A₀, A₁, A₂, A₃, A₄, A₅ pour lesquels les longueurs d'arcs de cercle associées I₀, I₁, I₂, I₃, I₄, I₅ sont connues. En reportant les longueurs curvilignes entre les points A₀, A₁, A₂, A₃, A₄, A₅ sur la direction de prolongement Dₚ, comme illustré sur la figure 6, on obtient un ensemble correspondant de points B₀, B₁, B₂, B₃, B₄, B₅ séparés par les longueurs curvilignes e₁, e₂, e₃, e₄, e₅. Ainsi, la longueur curviligne depuis la jonction jusqu'à l'arc de cercle correspondant au point A₄ sera la somme des longueurs e₁, e₂ et e₃. La longueur curviligne totale eₜₒₜₐₗ de la deuxième surface géométrique intermédiaire 200b ou de la bride 2 depuis la jonction jusqu'à son extrémité sera donc la longueur entre B₀ et B₅, soit la somme des longueurs e₁, e₂, e₃, e₄ et e₅, comme illustré sur la figure 6.

Par conséquent, chaque longueur l₀, l₁, l₂, l₃, l₄, l₅ d'arc de cercle est associée à une longueur curviligne définie à partir de la jonction ayant respectivement pour valeur 0, e₁, e₁+e₂, e₁+e₂+e₃, e₁+e₂+e₃+e₄, eₜₒₜₐₗ.

De manière générale, la première étape et la deuxième étape peuvent être réalisées simultanément, ou l'une après l'autre dans un ordre indifférent. A l'issue des deux premières étapes, chaque longueur curviligne partant de la jonction est associée à une longueur d'arc de cercle.

La troisième étape consiste à déterminer la géométrie de la deuxième surface 200 du moule, qui s'étend dans le prolongement de la première surface 100 du moule selon la direction de prolongement D_{P}.

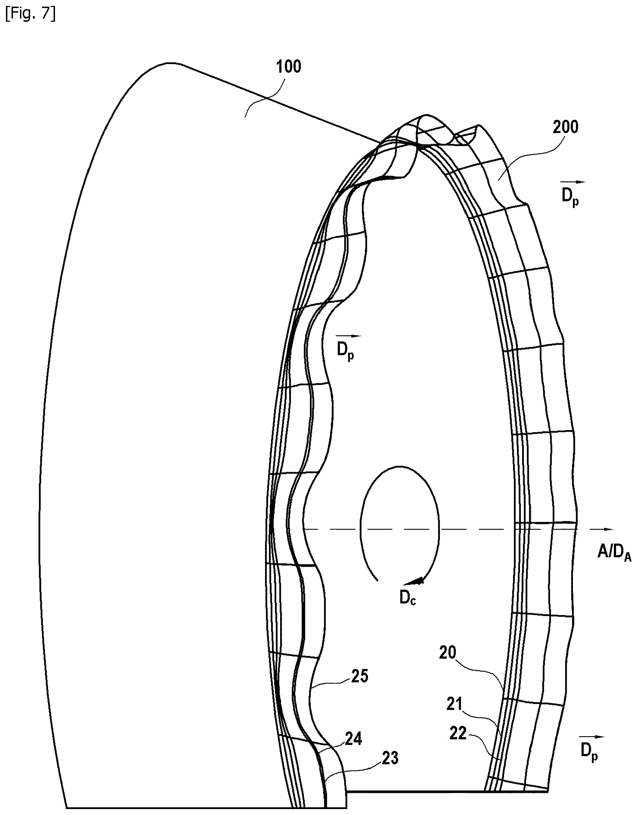

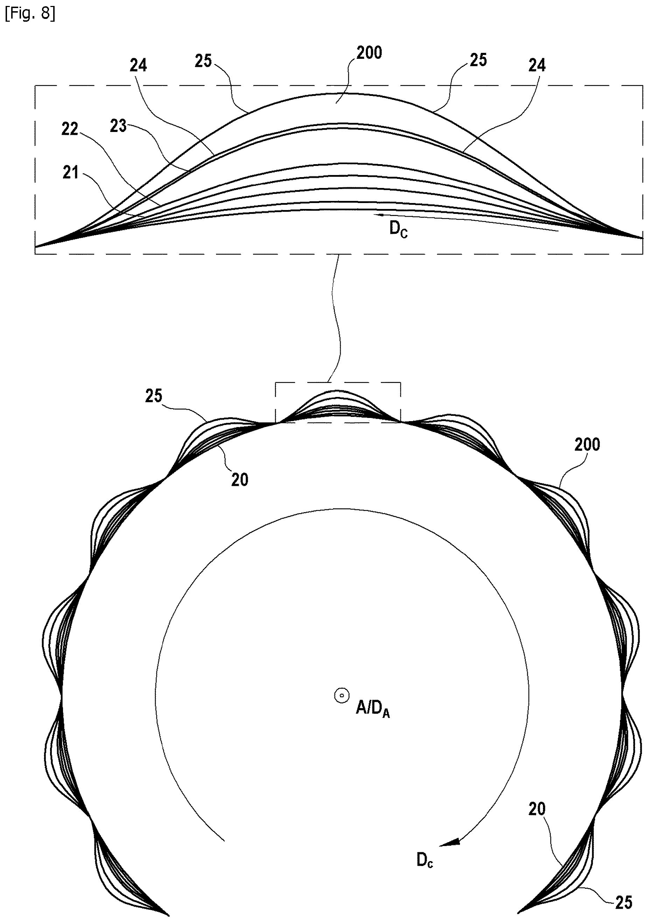

Comme illustré sur les figures 7 et 8, la deuxième surface 200 est conçue de sorte à présenter des ondulations dans la direction circonférentielle D_{C}. Ainsi, la deuxième surface 200 présente une pluralité de courbes 21, 22, 23, 24, 25 d'ondulations circonférentielles à la suite les unes des autres dans le sens de la direction axiale D_{A}. Une courbe d'ondulations circonférentielles comprend l'ensemble des points situés à une même distance curviligne de la jonction entre la première surface 100 et la deuxième surface 200, ladite distance curviligne appartenant à la deuxième surface 200.

Les ondulations d'une même courbe 21, 22, 23, 24, 25 ont une période régulière dans la direction circonférentielle D_{C}. Les ondulations des courbes 21, 22, 23, 24, 25 sont composées d'une alternance continue de courbes concaves et convexes selon la direction circonférentielle D_{C}. Les ondulations des courbes 21, 22, 23, 24, 25 sont de préférence périodiques, et éventuellement sinusoïdales ou globalement sinusoïdales, comme illustré sur la figure 8.

Les ondulations d'une même courbe 21, 22, 23, 24, 25 présentent une pluralité de maximums et une pluralité de minimums, la pluralité de maximums étant répartis sur un cercle dont le centre appartient à l'axe de révolution A de la première surface 100, et la pluralité de minimums étant répartis sur un cercle dont le centre appartient à l'axe de révolution A de la première surface 100. Ainsi, les ondulations d'une même courbe 21, 22, 23, 24, 25 ont une amplitude constante dans la direction circonférentielle D_{C}. Les minimums sont définis comme les points des courbes 21, 22, 23, 24, 25 les plus proches de l'axe de révolution A, et les maximums sont définis comme les points des courbes 21, 22, 23, 24, 25 les plus éloignés de l'axe de révolution A.

Les points d'inflexion d'une même courbe 21, 22, 23, 24, 25 d'ondulations sont répartis sur un cercle dont le centre appartient à l'axe de révolution de la première surface.

L'amplitude et le nombre des ondulations des courbes 21, 22, 23, 24, 25 sont choisis de sorte à permettre le passage de la tête de dépose automatique de fibre en tout point de la deuxième surface 200. Ainsi, l'amplitude n'est pas être trop importante afin de permettre le passage de ladite tête, ou de pouvoir déposer plusieurs mèches à la fois.

Dans l'exemple illustré sur les figures 7 à 10, les minimums de toutes les courbes d'ondulations circonférentielles sont répartis sur des cercles de rayons identiques, et de même rayon que l'arc de cercle 20 formant la jonction entre la première surface 100 et la deuxième surface 200. On ne sort bien entendu pas du cadre de l'invention si les minimums de toutes les courbes d'ondulations circonférentielles sont répartis sur des cercles de rayons identiques, mais de rayon supérieur au rayon de l'arc de cercle formant la jonction entre la première surface et la deuxième surface. On ne sort pas non plus du cadre de l'invention si les minimums de chaque courbe d'ondulations circonférentielle sont répartis sur des cercles de rayons différents, pourvu que lesdits rayons soient supérieurs au rayon de l'arc de cercle formant la jonction entre la première surface et la deuxième surface.

On ne sort pas non plus du cadre de l'invention si ce sont les points d'inflexions de toutes les courbes d'ondulations circonférentielles qui sont répartis sur des cercles de rayons identiques, et de même rayon que l'arc de cercle formant la jonction entre la première surface et la deuxième surface.

Plus l'on s'éloigne de la jonction entre la première surface 100 et la deuxième surface 200 dans la direction axiale D_{A}, plus les courbes 21, 22, 23, 24, 25 d'ondulations circonférentielles présentent progressivement une grande amplitude, comme illustré sur les figures 7 à 10.

La longueur curviligne de chacune des courbes 21, 22, 23, 24, 25 d'ondulations circonférentielles dépend de la distance curviligne de ladite courbe d'ondulations circonférentielles 21, 22, 23, 24, 25 par rapport à la jonction entre la première surface 100 et la deuxième surface 200. En utilisant les couples de longueur d'arc de cercle et de longueur curviligne définie à partir de la jonction (I₁; e₁), (l₂ ; e₁+e₂), (l₃ ; e₁+e₂+e₃), (l₄ ; e₁+e₂+e₃+e₄), (l₅ ; eₜₒₜₐₗ) déterminés à l'issue des première et deuxième étapes, on obtient que la longueur curviligne d'une courbe 21, 22, 23, 24, 25 d'ondulations circonférentielles située à une distance curviligne donnée de la jonction est la longueur de l'arc de cercle l₁, l₂, l₃, l₄, l₅ précédemment associée à ladite distance curviligne e₁, e₁+e₂, e₁+e₂+e₃, e₁+e₂+e₃+e₄, eₜₒₜₐₗ définie à partir de la jonction.

Ainsi les courbes 21, 22, 23, 24, 25 d'ondulations circonférentielles ont respectivement une longueur curviligne l₁, l₂, l₃, l₄, l₅ lorsque qu'elles sont éloignées de la jonction respectivement d'une distance curviligne e₁, e₁+e₂, e₁+e₂+e₃, e₁+e₂+e₃+e₄, eₜₒₜₐₗ.

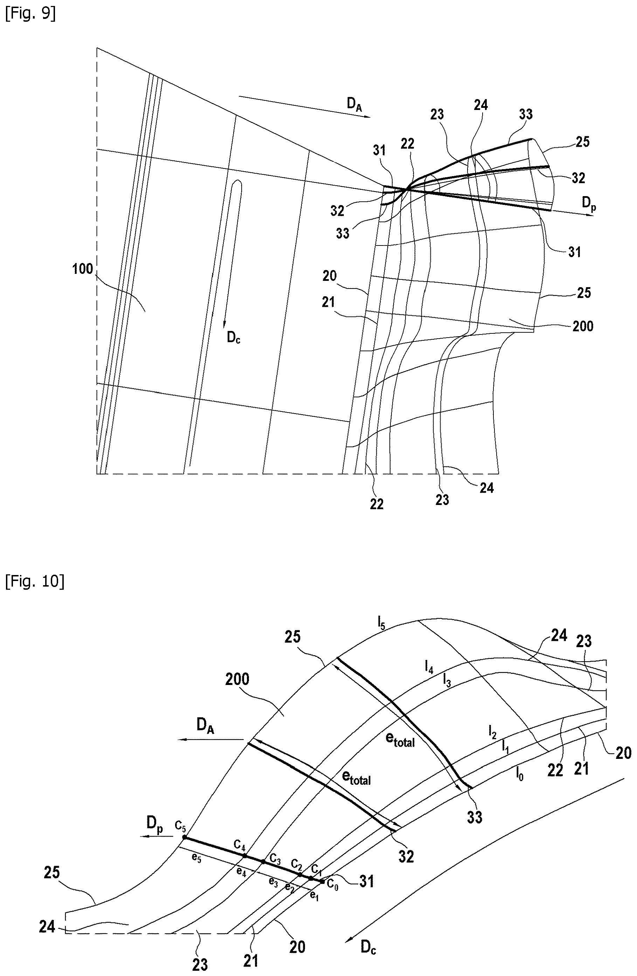

Comme illustré sur les figures 9 et 10, la deuxième surface 200 est conçue de sorte à présenter des courbures 32, 33 dans la direction de prolongement D_{P}. Ainsi, les distances e₁, e₂, e₃, e₄, eₜₒₜₐₗ peuvent ne pas être rectilignes selon leur position sur la deuxième surface 200. Ces courbures 32, 33, dites « de correction » sont nécessaires afin de limiter les contraintes lors de la déformation de l'ensemble drapé, principalement à la jonction entre le futur corps et la future bride. En effet, si les distances e₁, e₂, e₃, e₄, eₜₒₜₐₗ étaient rectilignes, comme c'est le cas dans l'état antérieur, la distance entre la jonction et l'extrémité de la deuxième surface 200 varierait selon sa position par rapport aux ondulations circonférentielles.

Par exemple, si les minimums de toutes les courbes d'ondulations circonférentielles sont répartis sur des cercles de même rayon que l'arc de cercle 20 formant la jonction entre la première surface 100 et la deuxième surface 200 comme dans notre exemple (voir figure 8), la distance rectiligne entre la jonction et l'extrémité de la deuxième surface 200 serait plus courte dans le creux des ondulations circonférentielles et plus grande sur la bosse des ondulations circonférentielles. Ainsi, au moment de la déformation de l'ensemble drapé, il manquerait de la longueur dans la direction d'extension D_{E} à plusieurs endroits de la bride 2, ce qui créerait des contraintes dans le matériau composite de la pièce 4.

Les courbures de correction 32, 33 présentées par la deuxième surface 200 dans la direction de prolongement D_{P} présentent au moins un point d'inflexion, comme illustré sur la figure 9. Les courbures de correction 32, 33 présentées par la deuxième surface 200 dans la direction de prolongement D_{P} peuvent être des portions d'une courbe d'ondulations oscillant entre un maximum et un minimum.

La deuxième surface 200 peut également comprendre des longueurs rectilignes 31, qui s'étendent depuis la jonction vers l'extrémité de la surface 200 selon la direction de prolongement D_{P}.

Toutes les courbures de correction 32, 33 et longueurs rectilignes 31 de la deuxième surface 200 dirigées selon la direction de prolongement D_{P} présentent une longueur curviligne identique, de valeur eₜₒₜₐₗ déterminée lors des étapes précédentes, comme illustré sur la figure 10. En outre, la distance curviligne parcourue par une courbure de correction 32, 33 ou par une longueur rectiligne 31 selon la direction de prolongement D_{P} entre la jonction et une courbe 21, 22, 23, 24 ou 25 d'ondulations circonférentielles aura respectivement pour valeur e₁, e₁+e₂, e₁+e₂+e₃, e₁+e₂+e₃+e₄, eₜₒₜₐₗ.

On obtient ainsi un ensemble de points C₀, C₁, C₂, C₃, C₄, C₅ situés à l'intersection entre une longueur rectiligne 31 (ou une courbure de correction 32, 33) et chacune des courbes 21, 22, 23, 24, 25 d'ondulations circonférentielles. Lorsque la portion drapée sur la deuxième surface 200 sera déformée dans la direction d'extension D_{E}, chaque point au contact d'un point C₀, C₁, C₂, C₃, C₄, C₅ sera respectivement situé à l'emplacement du point A₀, A₁, A₂, A₃, A₄, A₅ choisi lors de la première ou de la deuxième étape.

Finalement, les paramètres des ondulations circonférentielles et des courbures de correction 32, 33 de la deuxième surface 200, comme l'amplitude ou les rayons de courbure, sont choisis de sorte à permettre le passage de la tête de dépose automatique de fibre en tout point de la deuxième surface 200.

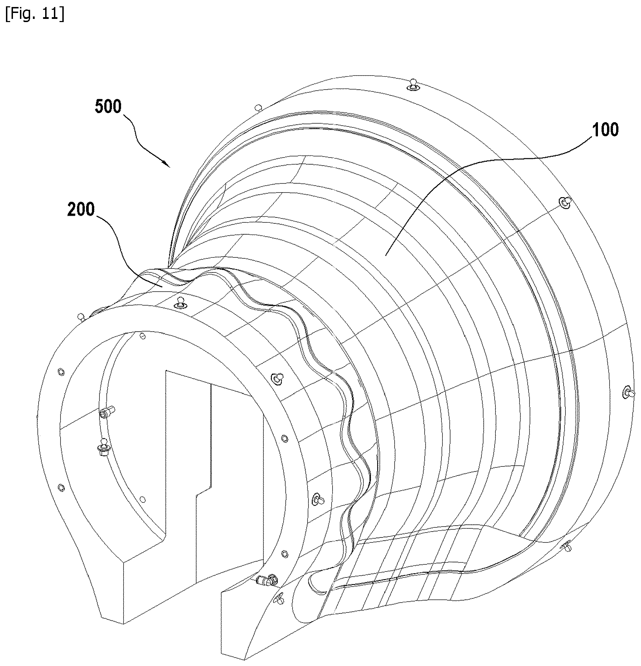

La conception d'une géométrie de drapage décrite précédemment permet ainsi de réaliser un moule adapté 500 pour un drapage automatique de fibres (AFP), comprenant la première surface 100 et la deuxième surface 200, tel qu'illustré sur la figure 11. Le moule peut être réalisé par fabrication additive, ou selon les moyens de fabrication usuels tels que l'usinage ou la fonderie. Le moule peut se présenter en plusieurs parties séparables plutôt que d'un seul tenant, afin de faciliter la ou les opérations de démoulage.

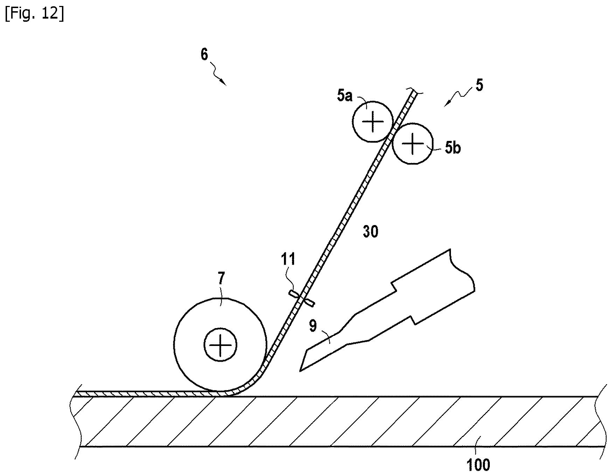

Nous allons maintenant décrire en relation avec les figures 12 à 15 un procédé de fabrication d'une pièce en matériau composite comprenant au moins une étape de drapage par placement automatique de fibres sur un moule conçu tel que décrit précédemment.

La figure 12 illustre schématiquement la structure d'une tête de dépose 6 d'un dispositif de mise en œuvre d'une technique AFP. La structure de la tête de dépose 6 est bien connue. La tête de dépose 6 est alimentée par une bande ou une mèche fibreuse 30.

La bande ou la mèche fibreuse 30 peut être sèche ou imprégnée. La bande ou la mèche fibreuse 30 peut par exemple être imprégnée par une suspension aqueuse comprenant des particules de précurseur de matrice, être imprégnée par un polymère thermodurcissable ou être imprégnée par un polymère thermoplastique, comme décrit dans le document FR3062336A1. Plus généralement, la bande 30 peut être imprégnée par une résine.

La bande ou la mèche fibreuse 30 peut être acheminée par un élément de convoyage 5 jusqu'à un élément d'application de la pression 7 situé du côté des surfaces 100 et 200 du moule de drapage. L'élément de convoyage 5 est ici sous la forme d'un couple de rouleaux contrarotatifs 5a et 5b entre lesquels la bande ou la mèche 30 est présente. L'élément de convoyage 5 permet de faire avancer la bande ou la mèche 30 jusqu'à l'élément d'application de la pression 7. L'élément d'application de la pression 7 applique une pression sur la bande ou la mèche 30 afin de réaliser un dépôt sur les première et deuxième surfaces 100 et 200 du moule de drapage. L'élément d'application de la pression 7 est ici sous la forme d'un rouleau.

La tête de dépose 6 peut, en outre, comporter un élément chauffant 9 situé au voisinage de l'élément d'application de la pression 7. Cet élément chauffant 9 permet, dans le cas d'une bande ou d'une mèche 30 imprégnée par un polymère thermoplastique ou thermodurcissable, de chauffer la bande ou la mèche 30 imprégnée lors de son dépôt afin de fluidifier le polymère et ainsi de conférer le pouvoir d'adhésion souhaité à la bande ou à la mèche 30 déposée.

Lors du dépôt, la tête de dépose 6 est mobile afin d'appliquer la bande ou la mèche 30 sur une première zone déterminée du moule de drapage, par exemple sur une portion de la première surface 100 du moule. Une fois l'application réalisée sur cette première zone, un élément de découpe 11 de la tête de dépose 6 coupe la bande ou la mèche 30. Après cette découpe, on obtient ainsi le dépôt d'une première structure fibreuse, formée par un premier tronçon de la bande ou de la mèche 30, sur la première zone du moule.

La formation de l'ébauche est ensuite poursuivie par avancée de la bande ou de la mèche 30 dans la tête de dépose 6 jusqu'à l'élément d'application de la pression 7 par actionnement de l'élément de convoyage 5. La tête de dépose 6 peut être déplacée afin de réaliser le dépôt de la mèche ou de la bande 30 sur une deuxième zone du moule. Le dépôt d'une deuxième structure fibreuse, formée par un deuxième tronçon de la bande 30, sur la deuxième zone du moule est alors obtenu d'une manière similaire à celle décrite précédemment.

La réalisation de l'ébauche est ensuite poursuivie par dépôt de plusieurs autres structures fibreuses de la même manière que décrite précédemment, jusqu'à recouvrir la première surface 100 et la deuxième surface 200.

Des traitements chimiques ou thermiques peuvent ensuite être réalisés sur l'ébauche selon la nature des structures fibreuses drapées.

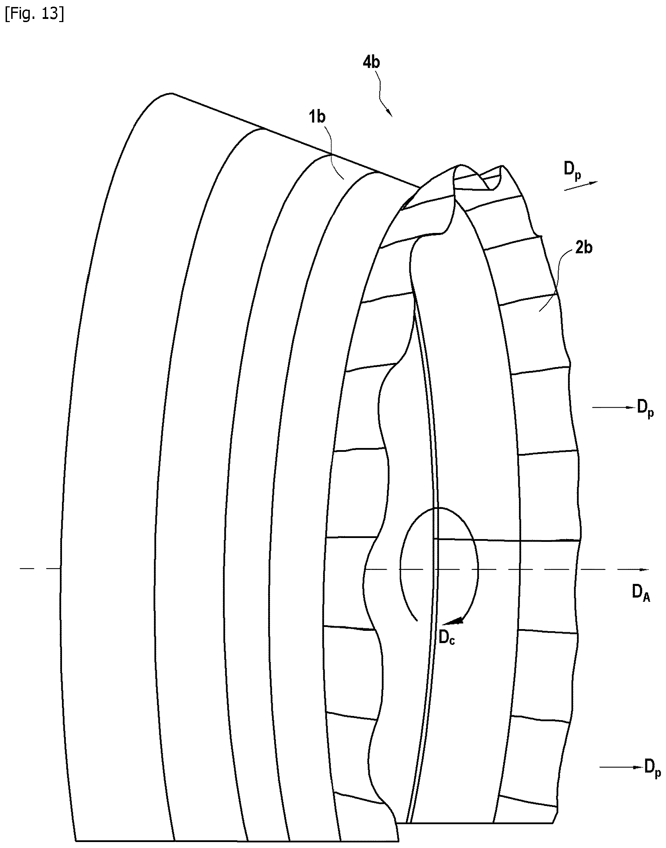

On obtient alors une ébauche fibreuse 4b réalisée par drapage comme illustré sur la figure 13, comprenant une ébauche de corps 1b ayant été drapée sur la première surface 100, et une ébauche de bride 2b ayant été drapée sur la deuxième surface 200. L'ébauche de corps 1b et l'ébauche de bride 2b forment l'ébauche fibreuse 4b.

On procède ensuite à la mise en forme de l'ébauche fibreuse 4b de sorte à obtenir une préforme fibreuse 4d ayant la forme de la pièce 4 à réaliser et comprenant une préforme de corps 1d et une préforme de bride 2d. La mise en forme de l'ébauche fibreuse 4b comprend la mise en forme de l'ébauche de corps 1b et la mise en forme de l'ébauche de bride 2b., qui peuvent être réalisées simultanément ou l'une après l'autre.

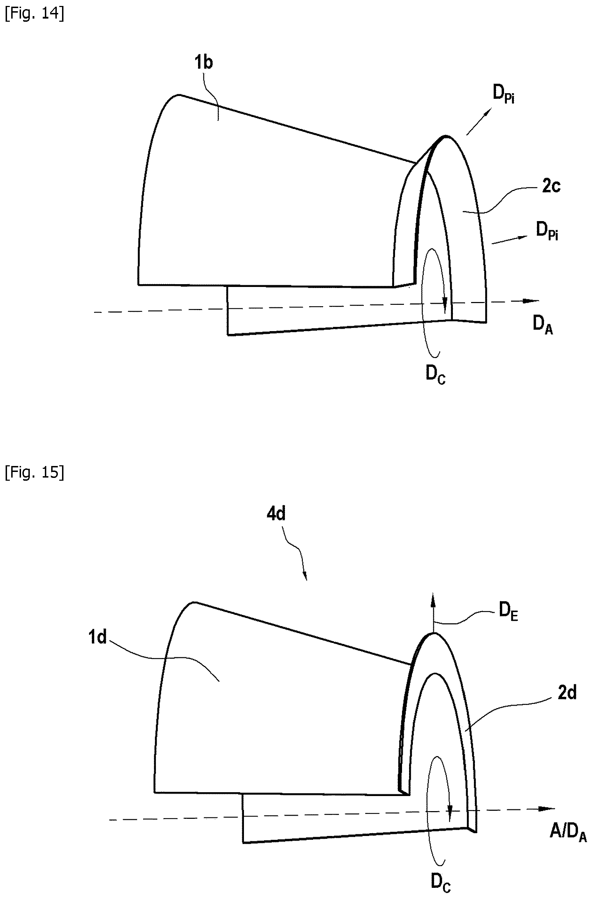

Selon une première variante, la mise en forme de l'ébauche fibreuse 4b comprend une première étape de mise en forme intermédiaire de l'ébauche de bride 2b de sorte à obtenir une préforme intermédiaire de bride 2c située dans le prolongement de l'ébauche de corps 1b et s'étendant depuis l'ébauche de corps 1b suivant la direction de prolongement intermédiaire D_{Pi}, comme illustré sur la figure 14. Cette préforme intermédiaire de bride 2c est obtenue par un rabattement partiel de l'ébauche de bride 2b, ledit rabattement étant permis par les ondulations présentes sur ladite ébauche de bride 2b. Dans la première étape de cette première variante, l'ébauche de corps 1b ne subit pas de déformation.

De préférence, cette variante correspond au cas où la deuxième surface 200 du moule a été déterminée à partir de la deuxième surface géométrique intermédiaire 200b, et non directement à partir du modèle géométrique de la bride 2. Ainsi, la préforme intermédiaire de bride 2c présente la forme de la deuxième surface géométrique intermédiaire 200b décrite précédemment. Grâce à la géométrie particulière de la deuxième surface 200 utilisée pour draper l'ébauche de bride 2b, l'ébauche de bride 2b se déforme parfaitement de sorte à ce que chaque courbe d'ondulations 21, 22, 23, 24, 25 devienne un arc de cercle présentant un rayon adapté et de sorte à ce que chaque courbure de correction 32, 33 s'étende dans la direction de prolongement intermédiaire D_{Pi}. Ainsi, il n'y a pas de contraintes importantes dans les fibres de la préforme intermédiaire de bride 2c, en particulier à la jonction entre l'ébauche de corps 1b et la préforme intermédiaire de bride 2c.

Dans cette première variante, la mise en forme de l'ébauche fibreuse 4b comprend également une deuxième étape de mise en forme de l'ébauche de corps 1b illustrée sur la figure 15, réalisée après la première étape illustrée sur la figure 14. On réalise lors de cette deuxième étape un déploiement de l'ébauche de corps 1b suivant la direction circonférentielle D_{C} de sorte à obtenir la préforme de corps 1d. L'étape de déploiement permet d'« ouvrir » l'ébauche de corps 1b en diminuant la valeur de l'angle interceptant l'arc de cercle formé par ladite ébauche dans chaque plan perpendiculaire à la direction axiale D_{A} : l'angle diminue depuis la valeur de construction θ_{C} jusqu'à atteindre l'angle de référence θ_{R} souhaité. En outre, l'étape de déploiement permet d'augmenter les rayons présentés par l'ébauche de corps 1b le long de la direction axiale D_{A} depuis les valeurs de constructions R_{C1}, R_{C2}, R_{C3} jusqu'à atteindre les valeurs de référence R_{R1}, R_{R2}, R_{R3} souhaitées. Ainsi, à la fin de l'étape de déploiement, la préforme de corps 1d obtenue présente les mêmes dimensions que le corps 1 à obtenir.

Le déploiement de l'ébauche de corps 1b entraîne en outre la mise en forme de la préforme intermédiaire de bride 2c en une préforme de bride 2d ayant la forme et la géométrie de la bride 2 à obtenir. En effet, le déploiement de l'ébauche de corps 1b pour obtenir la préforme de corps 1d entraîne un changement d'inclinaison de la préforme intermédiaire de bride 2c. Ainsi, la préforme intermédiaire de bride 2c s'étendant suivant la direction de prolongement intermédiaire D_{Pi} depuis l'ébauche de corps 1b avant la deuxième étape devient suite à cette deuxième étape une préforme de bride 2d s'étendant suivant la direction d'extension D_{E} depuis la préforme de corps 1d.

Dans cette première variante, une étape de compaction intermédiaire peut être réalisée entre la première et la deuxième étape.

Selon une deuxième variante, la mise en forme de l'ébauche fibreuse 4b comprend une première étape de mise en forme de l'ébauche de corps 1b de sorte à obtenir une préforme de corps 1d.

On réalise lors de cette première étape un déploiement de l'ébauche de corps 1b suivant la direction circonférentielle D_{C} de sorte à obtenir la préforme de corps 1d. L'étape de déploiement permet d'« ouvrir » l'ébauche de corps 1b en diminuant la valeur de l'angle interceptant l'arc de cercle formé par ladite ébauche dans chaque plan perpendiculaire à la direction axiale D_{A} : l'angle diminue depuis la valeur de construction θ_{C} jusqu'à atteindre l'angle de référence θ_{R} souhaité. En outre, l'étape de déploiement permet d'augmenter les rayons présentés par l'ébauche de corps 1b le long de la direction axiale D_{A} depuis les valeurs de constructions R_{C1}, R_{C2}, R_{C3} jusqu'à atteindre les valeurs de référence R_{R1}, R_{R2}, R_{R3} souhaitées. Ainsi, à la fin de l'étape de déploiement, la préforme de corps 1d obtenue présente les mêmes dimensions que le corps 1 à obtenir.

Le déploiement de l'ébauche de corps 1b entraîne en outre une mise en forme intermédiaire de l'ébauche de bride 2b qui permet d'obtenir une préforme de transition de la bride (variante non illustrée). En effet, le déploiement de l'ébauche de corps 1b pour obtenir la préforme de corps 1d entraîne un changement d'inclinaison de l'ébauche de bride 2b. Ainsi, l'ébauche de bride 2b s'étendant suivant la direction de prolongement D_{P} depuis l'ébauche de corps 1b avant la première étape devient suite à cette première étape une préforme de transition de bride s'étendant suivant une direction de prolongement de transition depuis la préforme de corps 1d. Pour rappel, l'angle formé entre la direction axiale et une autre direction doit se comprendre ici comme l'angle dirigé de la surface de l'ébauche ou de la préforme de corps vers la surface de l'ébauche ou de la préforme de transition de la bride, ledit angle étant mesuré depuis la partie de la direction axiale située du côté de la surface de l'ébauche ou de la préforme de corps vers la surface de l'ébauche ou de la préforme de transition de la bride.

De préférence, cette variante correspond au cas où la deuxième surface 200 du moule a été déterminée directement à partir du modèle géométrique de la bride 2, et non à partir d'une deuxième surface géométrique intermédiaire 200b telle que décrite précédemment. Ainsi, la préforme de transition de bride présente toujours les ondulations décrites précédemment.

Dans cette première variante, la mise en forme de l'ébauche fibreuse 4b comprend également une deuxième étape de mise en forme de la préforme de transition de bride en une préforme de bride 2d. La préforme de bride 2d est obtenue par un rabattement de la préforme de transition de bride, ledit rabattement étant permis par les ondulations présentes sur ladite préforme de transition de bride. Dans la deuxième étape de cette deuxième variante, la préforme de corps 1d ne subit pas de déformation.

Dans cette deuxième variante, une étape de compaction intermédiaire peut être réalisée entre la première et la deuxième étape.

Dans la première variante et la deuxième variante décrites ici, le fait de réaliser les deux étapes séparément l'une de l'autre permet une meilleure maîtrise de chaque étape, et en particulier une meilleure maîtrise du déploiement de l'ébauche de corps 1b et une meilleure maîtrise du lissage des ondulations présentes initialement sur l'ébauche de bride 2b.

Toutefois, on peut souhaiter réaliser la mise en forme de l'ébauche fibreuse 4b de la pièce rapidement, en une seule fois. Dans cette troisième variante, la mise en forme de l'ébauche fibreuse 4b en préforme fibreuse 4d de la pièce 4 est réalisée en une unique étape comprenant à la fois le déploiement de l'ébauche de corps 1b et le rabattement complet ainsi que le lissage des ondulations de l'ébauche de bride 2b.

Au terme de chacune des trois variantes décrites précédemment, on obtient une préforme fibreuse 4d de la pièce à réaliser comprenant la préforme de corps 1d du corps 1 à réaliser et la préforme de bride 2d de la bride 2 à réaliser, comme illustré sur la figure 15. Grâce à la géométrie particulière de la deuxième surface 200 utilisée pour draper l'ébauche de bride 2b, l'ébauche de bride 2b se déforme parfaitement de sorte à ce que chaque courbe d'ondulations 21, 22, 23, 24, 25 devienne un arc de cercle de la bride 2 à réaliser présentant un rayon adapté et de sorte à ce que chaque courbure de correction 32, 33 s'étende dans la direction d'extension D_{E}. Ainsi, il n'y a pas de contraintes importantes dans les fibres de la préforme fibreuse 4d, en particulier à la jonction entre la préforme de corps 1d et la préforme de bride 2d.

Le déploiement et la mise en forme de l'ébauche fibreuse 4b peuvent être réalisés à l'aide d'un ou de plusieurs mandrins de référence ayant la forme du corps 1 à réaliser, de la bride 2 à réaliser ou de la préforme intermédiaire de bride 2c souhaitée. L'ébauche fibreuse est ainsi déployée, mise en forme ou lissée de sorte à épouser la forme du ou des mandrins. La mise en forme de l'ébauche fibreuse 4b peut être réalisée par déformation mécanique. La mise en forme de l'ébauche fibreuse 4b peut également être réalisée à l'aide d'une vessie.

On peut ensuite procéder au traitement thermique de la préforme fibreuse 4d ainsi obtenue afin de former la matrice, si cette étape n'a pas encore été réalisée, de sorte à obtenir la pièce finale 4, ou au moins une pièce intermédiaire proche de la pièce finale 4.

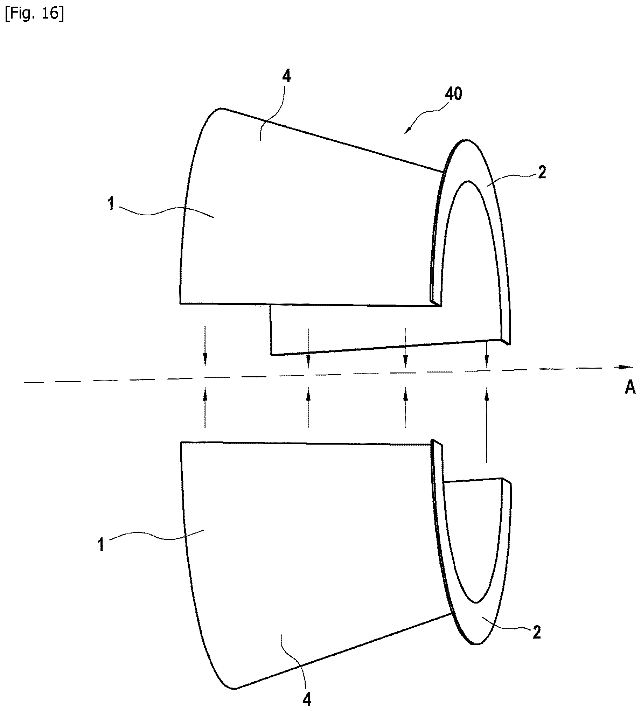

Si l'on souhaite fabriquer une pièce en matériau composite présentant une révolution complète autour d'un axe de révolution, comprenant un corps de révolution complet et une bride s'étendant depuis une extrémité dudit corps, on peut décomposer sa fabrication en réalisant plusieurs secteurs de ladite pièce répartis autour de l'axe de révolution, puis en assemblant lesdits secteurs pour obtenir la pièce souhaitée. Lesdits secteurs de la pièce présentant une révolution partielle, ils peuvent être réalisés selon le procédé de fabrication décrits précédemment. Par exemple, comme illustré sur la figure 16, il est possible de fabriquer deux pièces 4 comme décrit précédemment, puis d'assembler ces deux pièces 4 afin de former une pièce de révolution complète 40 d'axe de révolution A.

Dans la présente demande, les épaisseurs ont été négligées pour les considérations géométriques. Si l'on souhaite prendre en compte l'épaisseur de la pièce, de l'ébauche fibreuse et de la préforme fibreuse, il est nécessaire de se référer aux surfaces médianes et aux longueurs neutres, afin que les effets de tension et de compression sur les surfaces supérieurs et inférieures s'équilibrent.

L'expression « compris entre ... et ... » doit se comprendre comme incluant les bornes.

## Revendications

1. Procédé de détermination d'une géométrie d'un moule de drapage (500) pour la réalisation d'une ébauche (4b) d'une pièce en matériau composite (4), ladite pièce (4) comprenant un corps (1) de révolution partielle d'axe (A) dirigé selon une direction axiale (D_{A}) et présentant un ou plusieurs rayons de référence (R_{R1}, R_{R2}, R_{R3}) donnés le long de ladite direction axiale (D_{A}), ledit corps (1) s'étendant partiellement autour de la direction axiale (D_{A}) selon une direction circonférentielle (D_{C}), et ladite pièce (4) comprenant au moins une bride (2) s'étendant depuis une extrémité du corps (1) selon une direction d'extension (D_{E}), le procédé comprenant :
- la détermination d'une première surface (100) de révolution d'axe dirigé suivant la direction axiale (D_{A}), ladite première surface (100) s'étendant autour de la direction axiale (D_{A}) suivant la direction circonférentielle (D_{C}),
- la détermination d'une deuxième surface (200) située dans le prolongement de la première surface (100) selon une direction de prolongement (D_{P}), l'angle formé entre la direction axiale (D_{A}) et la direction de prolongement (D_{P}) étant supérieur à l'angle formé entre la direction axiale (D_{A}) et la direction d'extension (D_{E}), la deuxième surface (200) présentant des courbes d'ondulations (21, 22, 23, 24, 25) suivant la direction circonférentielle (D_{c}) se suivant successivement suivant la direction de prolongement (D_{P}), chaque courbe d'ondulations circonférentielles (21, 22, 23, 24, 25) correspondant à un arc de cercle appartenant à la bride (2) à réaliser, la longueur curviligne de ladite courbe d'ondulations (21, 22, 23, 24, 25) correspondant à la longueur (l₁, l₂, l₃, l₄, l₅) dudit arc de cercle,
le procédé étant **caractérisé en ce que** le ou les rayons (R_{C1}, R_{C2}, R_{C3}) présentés par la première surface (100) de révolution le long de la direction axiale (D_{A}) sont inférieurs à le ou les rayons de référence (R_{R1}, R_{R2}, R_{R3}) pour une même position (r₁, r₂, r₃) le long de la direction axiale (D_{A}), ladite première surface (100) correspondant à une courbure suivant la direction circonférentielle (D_{C}) d'une surface ayant la forme du corps (1) à réaliser,
et **en ce que** la deuxième surface (200) présente des courbures de correction (32, 33) dans la direction de prolongement (D_{P}), de sorte que tous les points de chaque courbe d'ondulations circonférentielles (21, 22, 23, 24, 25) sont à une même distance curviligne de la jonction entre la première surface (100) et la deuxième surface (200), ladite distance curviligne appartenant à la deuxième surface (200) et
ayant une valeur correspondant à la distance curviligne (e₁, e₁+e₂, e₁+e₂+e₃, e₁+e₂+e₃+e₄, eₜₒₜₐₗ) entre l'arc de cercle appartenant à la bride (2) à réaliser correspondant à ladite courbe d'ondulations circonférentielles (21, 22, 23, 24, 25), et
la jonction entre la bride (2) et le corps (1) à réaliser.

2. Procédé de détermination selon la revendication 1, dans lequel les points d'inflexion de chaque courbe d'ondulations circonférentielles (21, 22, 23, 24, 25) sont compris dans un même cercle.

3. Procédé de détermination selon la revendication 1 ou 2, dans lequel les minimums de chaque courbe d'ondulations circonférentielles (21, 22, 23, 24, 25) sont compris dans un même cercle dont le rayon est supérieur ou égal au rayon de l'arc de cercle (20) réalisant la jonction entre la première surface (100) et la deuxième surface (200).

4. Procédé de détermination selon l'une quelconque des revendications 1 à 3, dans lequel les courbures de correction (33) situées sur les maximums des ondulations circonférentielles présentent des rayons de courbure plus importants que les courbures de correction (32) situées sur les points d'inflexion des ondulations circonférentielles.

5. Procédé de détermination selon l'une quelconque des revendications 1 à 4, dans lequel la bride (2) à réaliser comprend un congé à sa jonction avec le corps (1) à réaliser.

6. Procédé de fabrication d'une pièce (4) en matériau composite comprenant un corps (1) de révolution partielle d'axe (A) dirigé selon une direction axiale (D_{A}) présentant un ou plusieurs rayons de référence (R_{R1}, R_{R2}, R_{R3}) donnés le long de ladite direction axiale (D_{A}), ledit corps (1) s'étendant partiellement autour de la direction axiale (D_{A}) selon une direction circonférentielle (D_{c}), et au moins une bride (2) s'étendant depuis une extrémité du corps (1) selon une direction d'extension (D_{E}), le procédé comprenant :
- la formation d'une ébauche fibreuse (4b) de la pièce (4) à obtenir par dépôt d'une pluralité de plis fibreux par placement automatique de fibres sur un moule de drapage (500) comprenant une première surface de drapage et une deuxième surface de drapage située dans le prolongement de la première surface de drapage, la première surface de drapage et la deuxième surface de drapage correspondant respectivement à au moins la première surface (100) et la deuxième surface (200) déterminées suivant le procédé de détermination d'une géométrie d'un moule de drapage selon l'une quelconque des revendications 1 à 5, la portion de l'ébauche (4b) réalisée sur la première surface de drapage correspondant à une ébauche du corps (1b) et la portion de l'ébauche (4b) réalisée sur la deuxième surface de drapage correspondant à une ébauche de la bride (2b),
- la mise en forme de l'ébauche fibreuse (4b) de sorte à obtenir une préforme fibreuse (4d), ladite mise en forme comprenant le déploiement de l'ébauche de corps (1b) suivant la direction circonférentielle (D_{c}) de sorte à obtenir une préforme de corps (1d) présentant le ou les rayons de référence (R_{R1}, R_{R2}, R_{R3}) le long de la direction axiale (D_{A}) et ayant la forme du corps (1) à réaliser, et la mise en forme de l'ébauche de bride (2b) de sorte à obtenir une préforme de bride (2d) s'étendant depuis l'extrémité de la préforme de corps (1d) suivant la direction d'extension (D_{E}) et ayant la forme de la bride (2) à réaliser, puis
- la densification de la préforme fibreuse (4d) par une matrice de sorte à obtenir la pièce (4) en matériau composite.

7. Procédé de fabrication selon la revendication 6, dans lequel le déploiement de l'ébauche de corps (1b) et la mise en forme de l'ébauche de bride (2b) sont réalisés simultanément.

8. Procédé de fabrication selon la revendication 6, dans lequel on réalise d'abord une mise en forme intermédiaire de l'ébauche de bride (2b) de sorte à obtenir une préforme intermédiaire de bride (2c) s'étendant depuis l'extrémité de l'ébauche de corps (1b) suivant une direction de prolongement intermédiaire (D_{Pi}), l'angle entre la direction de prolongement intermédiaire (D_{Pi}) et la direction axiale (D_{A}) étant inférieur à l'angle entre la direction de prolongement (D_{P}) et la direction axiale (D_{A}) mais supérieur à l'angle entre la direction d'extension (D_{E}) et la direction axiale (D_{A}), puis on réalise le déploiement de l'ébauche de corps de sorte à obtenir la préforme de corps et de sorte à réaliser la mise en forme de la préforme intermédiaire de bride (2c) afin d'obtenir la préforme de bride (2d) s'étendant depuis l'extrémité de la préforme de corps (1d) suivant la direction d'extension (D_{E}) et ayant la forme de la bride (2) à réaliser.

9. Procédé de fabrication d'une pièce (40) en matériau composite comprenant un corps de révolution complète d'axe (A) dirigé selon une direction axiale présentant un ou plusieurs rayons de référence donnés, ledit corps s'étendant partiellement autour de la direction axiale selon une direction circonférentielle, et au moins une bride s'étendant depuis une extrémité du corps selon une direction d'extension, le procédé comprenant :
- la réalisation de secteurs de pièce (4) comprenant un secteur de corps (1) de révolution partielle d'axe dirigé selon une direction axiale présentant le rayon de référence donné, ledit secteur de corps (1) s'étendant partiellement autour de la direction axiale selon une direction circonférentielle, et au moins un secteur de bride (2) s'étendant depuis une extrémité du secteur de corps (1) selon une direction d'extension, la fabrication desdits secteurs de pièce (4) étant réalisées selon le procédé de fabrication de l'une quelconque des revendications 6 à 8,
- l'assemblage des secteurs de pièce (4) pour obtenir la pièce (40) en matériau composite présentant une révolution complète.

## Patentansprüche

1. Verfahren zur Bestimmung einer Geometrie einer Drapierform (500) für die Verwirklichung eines Rohlings (4b) eines Teils aus Verbundmaterial (4), wobei das Teil (4) einen Teilrotationskörper (1) um eine gemäß einer axialen Richtung (D_{A}) ausgerichtete Achse (A) umfasst und einen oder mehrere entlang der axialen Richtung (D_{A}) gegebene Referenzradien (R_{R1}, R_{R2}, R_{R3}) aufweist, wobei der Körper (1) sich teilweise um die axiale Richtung (D_{A}) herum gemäß einer Umfangsrichtung (Dc) erstreckt, und das Teil (4) zumindest einen Flansch (2) umfasst, der sich von einem Ende des Körpers (1) weg gemäß einer Erstreckungsrichtung (D_{E}) erstreckt, wobei das Verfahren umfasst:
- die Bestimmung einer ersten Rotationsoberfläche (100) um die der axialen Richtung (D_{A}) folgend ausgerichtete Achse, wobei die erste Oberfläche (100) sich um die axiale Richtung (D_{A}) herum der Umfangsrichtung (Dc) folgend erstreckt,
- die Bestimmung einer zweiten Oberfläche (200), die sich in der Verlängerung der ersten Oberfläche (100) gemäß einer Verlängerungsrichtung (D_{P}) befindet, wobei der Winkel, der zwischen der axialen Richtung (D_{A}) und der Verlängerungsrichtung (D_{P}) gebildet wird, größer als der Winkel ist, der zwischen der axialen Richtung (D_{A}) und der Erstreckungsrichtung (D_{E}) gebildet wird, wobei die zweite Oberfläche (200) der Umfangsrichtung (Dc) folgend Kurven aus Wellen (21, 22, 23, 24, 25) aufweist, die der Verlängerungsrichtung (D_{P}) folgend einander nachfolgen, wobei jede Kurve aus umlaufenden Wellen (21, 22, 23, 24, 25) einem Kreisbogen entspricht, der in dem zu verwirklichenden Flansch (2) liegt, wobei die Kurvenlänge der Kurve aus Wellen (21, 22, 23, 24, 25) der Länge (l₁, l₂, l₃, l₄, l₅) des Kreisbogens entspricht,
wobei das Verfahren **dadurch gekennzeichnet ist, dass** der oder die Radien (R_{C1}, R_{C2}, R_{C3}), welche(n) die erste Rotationsoberfläche (100) entlang der axialen Richtung (D_{A}) aufweist, kleiner sind als der oder die Referenzradien (R_{R1}, R_{R2}, R_{R3}) für eine selbe Position (r₁, r₂, r₃) entlang der axialen Richtung (D_{A}), wobei die erste Oberfläche (100) einer der Umfangsrichtung (Dc) folgenden Krümmung einer Oberfläche entspricht, welche die Form des zu verwirklichenden Körpers (1) aufweist,
und dass die zweite Oberfläche (200) Korrekturkrümmungen (32, 33) in der Verlängerungsrichtung (D_{P}) aufweist, auf solche Weise, dass alle Punkte jeder Kurve aus umlaufenden Wellen (21, 22, 23, 24, 25) in einem selben kurvenförmigen Abstand zu der Vereinigung zwischen der ersten Oberfläche (100) und der zweiten Oberfläche (200) sind, wobei der kurvenförmige Abstand in der zweiten Oberfläche (200) liegt und einen Wert aufweist, der dem kurvenförmigen Abstand (e₁, e₁ + e₂, e₁ + e₂ + e₃, e₁ + e₂ + e₃ + e₄, eₜₒₜₐₗ) zwischen dem Kreisbogen, der in dem zu verwirklichenden Flansch (2) liegt und der Kurve aus umlaufenden Wellen (21, 22, 23, 24, 25) entspricht, und der Vereinigung zwischen dem Flansch (2) und dem zu verwirklichenden Körper (1) entspricht.

2. Verfahren zur Bestimmung nach Anspruch 1, wobei die Beugungspunkte jeder Kurve aus umlaufenden Wellen (21, 22, 23, 24, 25) in einem selben Kreis enthalten sind.

3. Verfahren zur Bestimmung nach Anspruch 1 oder 2, wobei die Minima jeder Kurve aus umlaufenden Wellen (21, 22, 23, 24, 25) in einem selben Kreis enthalten sind, dessen Radius größer als oder gleich dem Radius des Kreisbogens (20) ist, der die Vereinigung zwischen der ersten Oberfläche (100) und der zweiten Oberfläche (200) verwirklicht.

4. Verfahren zur Bestimmung nach einem der Ansprüche 1 bis 3, wobei die Korrekturkrümmungen (33), die sich an den Maxima der umlaufenden Wellen befinden, größere Krümmungsradien aufweisen als die Korrekturkrümmungen (32), die sich an den Beugungspunkten der umlaufenden Wellen befinden.

5. Verfahren zur Bestimmung nach einem der Ansprüche 1 bis 4, wobei der zu verwirklichende Flansch (2) an seiner Vereinigung mit dem zu verwirklichenden Körper (1) eine Ausrundung umfasst.

6. Verfahren zur Herstellung eines Teils (4) aus Verbundmaterial, umfassend einen Teilrotationskörper (1) um eine gemäß einer axialen Richtung (D_{A}) ausgerichtete Achse (A), der einen oder mehrere gegebene Referenzradien (R_{R1}, R_{R2}, R_{R3}) entlang der axialen Richtung (D_{A}) aufweist, wobei der Körper (1) sich teilweise um die axiale Richtung (D_{A}) herum gemäß einer Umfangsrichtung (Dc) erstreckt, und zumindest ein Flansch (2) sich von einem Ende des Körpers (1) weg gemäß einer Erstreckungsrichtung (D_{E}) erstreckt, wobei das Verfahren umfasst:
- die Bildung eines Faserrohlings (4b) des zu erhaltenden Teils (4) durch Ablagerung einer Vielzahl von Faserlagen durch automatisches Platzieren von Fasern an einer Drapierform (500), die eine erste Drapieroberfläche und eine zweite Drapieroberfläche umfasst, die sich in der Verlängerung der ersten Drapieroberfläche befindet, wobei die erste Drapieroberfläche und die zweite Drapieroberfläche jeweils zumindest der ersten Oberfläche (100) und der zweiten Oberfläche (200) entsprechen, die dem Verfahren zur Bestimmung einer Geometrie einer Drapierform nach einem der Ansprüche 1 bis 5 folgend bestimmt wurden, wobei der Abschnitt des Rohlings (4b), der an der ersten Drapieroberfläche verwirklicht wird, einem Rohling des Körpers (1b) entspricht, und der Abschnitt des Rohlings (4b), der an der zweiten Drapieroberfläche verwirklicht wird, einem Rohling des Flanschs (2b) entspricht,
- die Formung des Faserrohlings (4b) auf eine Weise, um eine Faservorform (4d) zu erhalten, wobei die Formung die Entwicklung des Körperrohlings (1b) der Umfangsrichtung (Dc) folgend auf eine Weise umfasst, um eine Körpervorform (1d) zu erhalten, welche den oder die Referenzradien (R_{R1}, R_{R2}, R_{R3}) entlang der axialen Richtung (D_{A}) aufweist und die Gestalt des zu verwirklichenden Körpers (1) aufweist, und die Formung des Flanschrohlings (2b) auf eine Weise, um eine Flanschvorform (2d) zu erhalten, die sich von dem Ende der Körpervorform (1d) der Erstreckungsrichtung (D_{E}) folgend erstreckt und die Form des zu verwirklichenden Flanschs (2) aufweist, anschließend
- die Verdichtung der Faservorform (4d) durch eine Matrix auf eine Weise, um das Teil (4) aus Verbundmaterial zu erhalten.

7. Verfahren zur Herstellung nach Anspruch 6, wobei das Ausbringen des Körperrohlings (1b) und die Formung des Flanschrohlings (2b) gleichzeitig verwirklicht werden.

8. Verfahren zur Herstellung nach Anspruch 6, wobei zuerst eine intermediäre Formung des Flanschrohlings (2b) auf eine Weise verwirklicht wird, um eine intermediäre Flanschvorform (2c) zu erhalten, die sich von dem Ende des Körperrohlings (1b) weg einer intermediären Verlängerungsrichtung (D_{Pi}) folgend erstreckt, wobei der Winkel zwischen der intermediären Verlängerungsrichtung (D_{Pi}) und der axialen Richtung (D_{A}) kleiner als der Winkel zwischen der Verlängerungsrichtung (D_{P}) und der axialen Richtung (D_{A}), aber größer als der Winkel zwischen der Erstreckungsrichtung (D_{E}) und der axialen Richtung (D_{A}) ist, anschließend die Entwicklung des Körperrohlings auf eine Weise verwirklicht wird, um die Körpervorform zu erhalten, und auf eine Weise, um die Formung der intermediären Flanschvorform (2c) zu verwirklichen, um die Flanschvorform (2d) zu erhalten, die sich von dem Ende der Körpervorform (1d) weg der Erstreckungsrichtung (D_{E}) folgend erstreckt und die Gestalt des zu verwirklichenden Flanschs (2) aufweist.

9. Verfahren zur Herstellung eines Teils (40) aus Verbundmaterial, umfassend einen vollständigen Rotationskörper um eine gemäß einer axialen Richtung ausgerichtete Achse (A), der einen oder mehrere gegebene Referenzradien aufweist, wobei der Körper sich teilweise um die axiale Richtung herum gemäß einer Umfangsrichtung erstreckt, und zumindest einen Flansch, der sich von einem Ende des Körpers weg gemäß einer Erstreckungsrichtung erstreckt, wobei das Verfahren umfasst:
- die Verwirklichung von Sektoren des Teils (4) umfassend einen Sektor des Teilrotationskörpers (1) um eine einer axialen Richtung folgend ausgerichtete Achse, der den gegebenen Referenzradius aufweist, wobei der Sektor des Körpers (1) sich teilweise um die axiale Richtung herum gemäß einer Umfangsrichtung erstreckt, und zumindest einen Sektor des Flanschs (2), der sich von einem Ende des Sektors des Körpers (1) weg gemäß einer Erstreckungsrichtung erstreckt, wobei die Herstellung der Sektoren des Teils (4) nach dem Verfahren zur Herstellung nach einem der Ansprüche 6 bis 8 verwirklicht wird,
- den Zusammenbau der Sektoren des Teils (4), um das Teil (40) aus Verbundmaterial zu erhalten, das eine vollständige Rotation aufweist.

## Claims

1. A method for determining a geometry of a draping mold (500) for producing a blank (4b) of a composite material part (4), said part (4) comprising a body (1) of partial revolution with an axis (A) directed along an axial direction (D_{A}) and having one or more reference radii (R_{R1}, R_{R2}, R_{R3}) given along said axial direction (D_{A}), said body (1) extending partially around the axial direction (D_{A}) along a circumferential direction (D_{C}), and said part (4) comprising at least one flange (2) extending from one end of the body (1) along a direction of extension (D_{E}), the method comprising:
- determining a first surface (100) of revolution with an axis directed in the axial direction (D_{A}), said first surface (100) extending around the axial direction (D_{A}) in the circumferential direction (D_{C}),
- determining a second surface (200) located in the extension of the first surface (100) along a direction of extension (D_{P}), the angle formed between the axial direction (D_{A}) and the direction of extension (D_{P}) being greater than the angle formed between the axial direction (D_{A}) and the direction of extension (D_{E}), the second surface (200) having corrugation curves (21, 22, 23, 24, 25) in the circumferential direction (D_{C}) successively following each other in the direction of extension (D_{P}), each circumferential corrugation curve (21, 22, 23, 24, 25) corresponding to a circular arc belonging to the flange (2) to be produced, the curvilinear length of said corrugation curve (21, 22, 23, 24, 25) corresponding to the length (l₁, l₂, l₃, l₄, l₅) of said circular arc,
the method being **characterized in that** the radius or radii (R_{C1}, R_{C2}, R_{C3}) presented by the first surface (100) of revolution along the axial direction (D_{A}) is/are smaller than the reference radius or radii (R_{R1}, R_{R2}, R_{R3}) for the same position (r₁, r₂, r₃) along the axial direction (D_{A}), said first surface (100) corresponding to a curvature in the circumferential direction (D_{C}) of a surface having the shape of the body (1) to be produced,
and **in that** the second surface (200) has correction curvatures (32, 33) in the direction of extension (D_{P}), so that all the points of each circumferential corrugation curve (21, 22, 23, 24, 25) are at the same curvilinear distance from the junction between the first surface (100) and the second surface (200), said curvilinear distance belonging to the second surface (200) and having a value corresponding to the curvilinear distance (e₁, e₁+e₂, e₁+e₂+e₃, e₁+e₂+e₃+e₄, eₜₒₜₐₗ) between the circular arc belonging to the flange (2) to be produced corresponding to said circumferential corrugation curve (21, 22, 23, 24, 25), and the junction between the flange (2) and the body (1) to be produced.

2. The determination method according to claim 1, wherein the inflection points of each circumferential corrugation curve (21, 22, 23, 24, 25) are comprised in the same circle.

3. The determination method according to claim 1 or 2, wherein the minima of each circumferential corrugation curve (21, 22, 23, 24, 25) are comprised in the same circle whose radius is greater than or equal to the radius of the circular arc (20) making the junction between the first surface (100) and the second surface (200).

4. The determination method according to any one of claims 1 to 3, wherein the correction curvatures (33) located on the maxima of the circumferential corrugations have larger radii of curvature than the correction curvatures (32) located on the inflection points of the circumferential corrugations.

5. The determination method according to any one of claims 1 to 4, wherein the flange (2) to be produced comprises a fillet at its junction with the body (1) to be produced.

6. A method for manufacturing a composite material part (4) comprising a body (1) of partial revolution with an axis (A) directed along an axial direction (D_{A}) having one or more reference radii (R_{R1}, R_{R2}, R_{R3}) given along said axial direction (D_{A}), said body (1) extending partially around the axial direction (D_{A}) along a circumferential direction (D_{C}), and at least one flange (2) extending from one end of the body (1) along a direction of extension (D_{E}), the method comprising:
- forming a fibrous blank (4b) of the part (4) to be obtained by depositing a plurality of fibrous plies by automatic fiber placement on a draping mold (500) comprising a first draping surface and a second draping surface located in the extension of the first draping surface, the first draping surface and the second draping surface corresponding respectively to at least the first surface (100) and the second surface (200) determined according to the method for determining a geometry of a draping mold according to any one of claims 1 to 5, the portion of the blank (4b) produced on the first draping surface corresponding to a blank of the body (1b) and the portion of the blank (4b) produced on the second draping surface corresponding to a blank of the flange (2b),
- shaping the fibrous blank (4b) so as to obtain a fibrous preform (4d), said shaping comprising the deployment of the body blank (1b) in the circumferential direction (D_{c}) so as to obtain a body preform (1d) having the reference radius or radii (R_{R1}, R_{R2}, R_{R3}) along the axial direction (D_{A}) and having the shape of the body (1) to be produced, and shaping the flange blank (2b) so as to obtain a flange preform (2d) extending from the end of the body preform (1d) in the direction of extension (D_{E}) and having the shape of the flange (2) to be produced, then
- densifying the fibrous preform (4d) by a matrix so as to obtain the composite material part (4).

7. The manufacturing method according to claim 6, wherein the deployment of the body blank (1b) and the shaping of the flange blank (2b) are carried out simultaneously.

8. The manufacturing method according to claim 6, wherein an intermediate shaping of the flange blank (2b) is first carried out so as to obtain an intermediate flange preform (2c) extending from the end of the body blank (1b) in an intermediate direction of extension (D_{Pi}), the angle between the intermediate direction of extension (D_{Pi}) and the axial direction (D_{A}) being smaller than the angle between the direction of extension (D_{P}) and the axial direction (D_{A}) but greater than the angle between the direction of extension (D_{E}) and the axial direction (D_{A}), then the deployment of the body blank is carried out so as to obtain the body preform and so as to carry out the shaping of the intermediate flange preform (2c) in order to obtain the flange preform (2d) extending from the end of the body preform (1d) in the direction of extension (D_{E}) and having the shape of the flange (2) to be produced.

9. A method for manufacturing a composite material part (40) comprising a body of complete revolution with an axis (A) directed along an axial direction having one or more given reference radii, said body extending partially around the axial direction along a circumferential direction, and at least one flange extending from one end of the body along a direction of extension, the method comprising:
- producing part sectors (4) comprising a body sector (1) of partial revolution with an axis directed along an axial direction having the given reference radius, said body sector (1) extending partially around the axial direction along a circumferential direction, and at least one flange sector (2) extending from one end of the body sector (1) along a direction of extension, the manufacturing of said part sectors (4) being carried out according to the manufacturing method of any one of claims 6 to 8,
- assembling the part sectors (4) to obtain the composite material part (40) having a complete revolution.
